# EUROPEAN PATENT APPLICATION

(11) **EP 4 672 072 A1**
(43) Date of publication of application: **31.12.2025**
(21) Application number: 23930917.2
(22) Date of filing: 14.12.2023
(51) Int. Cl.: G06F 30/10, G06Q 50/04

(54) **PURCHASE ASSISTANCE DEVICE, PURCHASE ASSISTANCE METHOD, AND PURCHASE ASSISTANCE PROGRAM**

(30) Priority: 29.03.2023 JP 2023053258
(71) Applicant: MITSUBISHI HEAVY INDUSTRIES, LTD., Chiyoda-ku Tokyo 100-8332 (JP)
(72) Inventor: SHIMBO, Yoichi, Tokyo 100-8332 (JP)
(74) Representative: Hoffmann Eitle
(86) International application number: PCT/JP2023/044849
(87) International publication number: WO 2024/202297

(57) **Abstract**

The purpose of the present invention is to collectively provide a user with a plurality of plant components constituting a fluid transport system. This purchase assistance device (1a) comprises: a condition input assistance unit (31) that acquires, as a selection condition, a requested function and a requested specification relating to a fluid transport system that a user desires to purchase; a standard system constitution generation unit (32) that identifies a plurality of standard components respectively corresponding to a plurality of element components constituting the fluid transport system, on the basis of the selection condition, from a standard component database (21) storing information relating to a plurality of standard components relating to the fluid transport system; and an order specification creation unit (61) that creates an ordered specification on the basis of a standard fluid transport system constituted of the specified plurality of standard components.

## Description

### Technical Field

The present disclosure relates to a purchase assistance device, a purchase assistance method, and a purchase assistance program.

### Background Art

For example, in a case where a purchase applicant (hereinafter, may be referred to as "user") purchases a plant component, the following steps generally need to be taken with a supplier. An example of the purchase applicant includes a plant manufacturer or a factory operating a plant.

First, a purchase applicant creates a component order specification sheet and presents the created order specification sheet to the supplier to make a quotation request. The supplier creates a quotation sheet based on the order specification sheet and presents the created quotation sheet to the purchase applicant. The purchase applicant adjusts the specification, and places an order with the supplier to whom the quotation request is made.

In this manner, in the related art, since a large number of steps are required until the order is placed, time and effort are required to place the order for a component. The quotation can be obtained only from the supplier to whom the purchase applicant has made an inquiry. For this reason, for example, even in a case where there is a supplier that provides the same component under a better condition (for example, low price, short delivery date, or good service), there is a disadvantage that the supplier cannot be reached. Furthermore, even on the supplier side, in a case of a small-scale project involving a component having a low unit price, sales or profits are small compared to the effort of creating a quotation, and the effort may not be worthwhile. For this reason, there is a concern that the purchase applicants may suffer disadvantages such as a delayed response compared with other projects or a provision price being quoted to be relatively high.

In the related art, as a system for reducing a step and an effort of procuring a component, for example, there is a manufacturing outsourcing assistance device disclosed in PTL 1. In a case where drawing data of a component is received from a manufacturer, the manufacturing outsourcing assistance device analyzes the received drawing data to determine processability of the component, requests a quotation to a plurality of process contractors capable of processing the component, and answers the manufacturer with a quotation price. In this manner, since the manufacturing outsourcing assistance device disclosed in PTL 1 mediates the exchange between the manufacturer and the process contractor, it is possible to reduce a burden on both parties related to the component procurement.

PTL 2 discloses a device that can automatically quote a price or delivery date of a set of a plurality of components configuring a mechanical device and provide the quoted price or delivery date to a user.

### Citation List

### Patent Literatures

[PTL 1] Japanese Patent No. 6462945
[PTL 2] Japanese Patent No. 6415492

### Summary of Invention

### Technical Problem

However, the devices disclosed in PTLs 1 and 2 are systems specialized for processed products, and cannot be immediately applied to arrangement of a plant component. That is, there is a need to decide a plant component to be purchased, in consideration of parameters specific to a fluid transport system such as flow rate or pressure loss, in addition to constraint conditions such as design pressure, running pressure, design temperature, and running temperature.

The present disclosure has been made in view of such circumstances, and an object of the present disclosure is to provide a purchase assistance device, a purchase assistance method, and a purchase assistance program capable of collectively presenting a plurality of plant components configuring a fluid transport system to a user.

### Solution to Problem

According to one aspect of the present disclosure, there is provided a purchase assistance device that assists in purchasing a fluid transport system including a plurality of plant components, the purchase assistance device including a condition input assistance unit that acquires, as selection conditions, a required function and a required specification related to a fluid transport system that a user desires to purchase, a standard system configuration generation unit that specifies, from a standard component database in which information on a plurality of standard components related to the fluid transport system is stored, a plurality of standard components each corresponding to a plurality of element components configuring the fluid transport system based on the selection conditions, and an order specification sheet creation unit that creates an order specification sheet based on a standard fluid transport system configured of the specified plurality of standard components.

According to one aspect of the present disclosure, there is provided a purchase assistance device that assists in purchasing a fluid transport system including a plurality of plant components, the purchase assistance device including a condition input assistance unit that acquires, as selection conditions, a required function and a required specification related to a fluid transport system that a user desires to purchase, a standard system configuration generation unit that specifies, from a standard component database in which information on a plurality of standard components related to the fluid transport system is stored, a plurality of standard components each corresponding to a plurality of element components configuring the fluid transport system based on the selection conditions, a system component selection unit that selects, based on specifications of the plurality of standard components, one or a plurality of supplier components each corresponding to the element components from a supplier component database in which information on supplier components sold by a supplier is stored, and a selection candidate generation unit that generates a plurality of system configuration candidates, which are combinations of supplier components configuring the fluid transport system, based on the selected plurality of supplier components, generates a comparison selection screen in which the plurality of system configuration candidates are shown in a comparable manner, and provides the generated comparison selection screen to a client terminal.

According to one aspect of the present disclosure, there is provided a purchase assistance method of assisting in purchasing a fluid transport system including a plurality of plant components, the purchase assistance method executed by a computer including a condition input assistance step of acquiring, as selection conditions, a required function and a required specification related to a fluid transport system that a user desires to purchase, a standard system configuration generation step of specifying, from a standard component database in which information on a plurality of standard components related to the fluid transport system is stored, a plurality of standard components each corresponding to a plurality of element components configuring the fluid transport system based on the selection conditions, and an order specification sheet creation step of creating an order specification sheet based on a standard fluid transport system configured of the specified plurality of standard components.

According to one aspect of the present disclosure, there is provided a purchase assistance method of assisting in purchasing a fluid transport system including a plurality of plant components, the purchase assistance method executed by a computer including a condition input assistance step of acquiring, as selection conditions, a required function and a required specification related to a fluid transport system that a user desires to purchase, a standard system configuration generation step of specifying, from a standard component database in which information on a plurality of standard components related to the fluid transport system is stored, a plurality of standard components each corresponding to a plurality of element components configuring the fluid transport system based on the selection conditions, a system component selection step of selecting, based on specifications of the plurality of standard components, one or a plurality of supplier components each corresponding to the element components from a supplier component database in which information on supplier components sold by a supplier is stored, and a selection candidate generation step of generating a plurality of system configuration candidates, which are combinations of supplier components configuring the fluid transport system, based on the selected plurality of supplier components, generating a comparison selection screen in which the plurality of system configuration candidates are shown in a comparable manner, and providing the generated comparison selection screen to a client terminal.

According to one aspect of the present disclosure, there is provided a purchase assistance program for causing a computer to function as the purchase assistance device according to any one of the above aspects.

### Advantageous Effects of Invention

With the purchase assistance device, the purchase assistance method, and the purchase assistance program of the present disclosure, it is possible to achieve the effect capable of collectively presenting the plurality of plant components configuring the fluid transport system to the user.

### Brief Description of Drawings

FIG. 1 is a diagram showing a network configuration of a purchase assistance device according to a first embodiment of the present disclosure.
FIG. 2 is a schematic configuration diagram showing an example of a hardware configuration of the purchase assistance device according to the first embodiment of the present disclosure.
FIG. 3 is a functional configuration diagram showing an example of functions of the purchase assistance device according to the first embodiment of the present disclosure.
FIG. 4 is a diagram showing an example of information stored in a standard component database according to the first embodiment of the present disclosure.
FIG. 5 is a diagram showing an example of supplier component information stored in a supplier component database according to the first embodiment of the present disclosure.
FIG. 6 is a diagram showing an example of a condition input screen according to the first embodiment of the present disclosure.
FIG. 7 is a diagram showing an example of the condition input screen according to the first embodiment of the present disclosure.
FIG. 8 is a diagram showing an example of the condition input screen according to the first embodiment of the present disclosure.
FIG. 9 is a diagram showing an example of the condition input screen according to the first embodiment of the present disclosure.
FIG. 10 is a diagram showing an example of the condition input screen according to the first embodiment of the present disclosure.
FIG. 11 is a diagram showing an example of the condition input screen according to the first embodiment of the present disclosure.
FIG. 12 is a diagram showing an example of the condition input screen according to the first embodiment of the present disclosure.
FIG. 13 is a diagram showing an example of the condition input screen according to the first embodiment of the present disclosure.
FIG. 14 is a diagram showing an example of the condition input screen according to the first embodiment of the present disclosure.
FIG. 15 is a diagram showing an example of the condition input screen according to the first embodiment of the present disclosure.
FIG. 16 is a diagram showing an example of the condition input screen according to the first embodiment of the present disclosure.
FIG. 17 is a diagram showing an example of the condition input screen according to the first embodiment of the present disclosure.
FIG. 18 is a diagram showing an example of a standard system configuration adjustment screen according to the first embodiment of the present disclosure.
FIG. 19 is a diagram showing an example of information stored in a system configuration storage unit according to the first embodiment of the present disclosure.
FIG. 20 is a diagram showing an example of a calculation block chain according to the first embodiment of the present disclosure.
FIG. 21 is a diagram showing an example of a standard system selection screen according to the first embodiment of the present disclosure.
FIG. 22 is a diagram showing an example of data stored in a component candidate storage unit according to the first embodiment of the present disclosure.
FIG. 23 is a diagram showing an example of a comparison selection screen according to the first embodiment of the present disclosure.
FIG. 24 is a diagram showing an example of an individual selection screen according to the first embodiment of the present disclosure.
FIG. 25 is a diagram showing an example of data stored in a selected component storage unit according to the first embodiment of the present disclosure.
FIG. 26 is a diagram showing an example of a system configuration adjustment screen according to the first embodiment of the present disclosure.
FIG. 27 is a diagram showing an example of a final check screen according to the first embodiment of the present disclosure.
FIG. 28 is a diagram showing an example of an order reservation screen according to the first embodiment of the present disclosure.
FIG. 29 is a diagram showing an example of an option selection screen according to the first embodiment of the present disclosure.
FIG. 30 is a diagram showing an example of a quotation sheet check screen according to the first embodiment of the present disclosure.
FIG. 31 is a flowchart showing an example of a processing procedure of a purchase assistance method according to the first embodiment of the present disclosure.
FIG. 32 is a diagram showing a relationship between plant components.
FIG. 33 is a functional configuration diagram showing an example of functions of the purchase assistance device according to a second embodiment of the present disclosure.
FIG. 34 is a diagram showing an example of a required specification in performance aspects in a case where a target component is a valve according to the second embodiment of the present disclosure.
FIG. 35 is a diagram showing an example of required specification data according to the second embodiment of the present disclosure.
FIG. 36 is a diagram showing an example of a quotation request screen according to the second embodiment of the present disclosure.
FIG. 37 is a diagram showing an example of the comparison selection screen in a case where an element component is a pump according to the second embodiment of the present disclosure.

### Description of Embodiments

### [First Embodiment]

Hereinafter, a purchase assistance device 1, a purchase assistance method, and a purchase assistance program according to a first embodiment of the present disclosure will be described with reference to drawings.

The purchase assistance device 1 according to the present embodiment is suitable for a case where a group of components (set of components) configuring a fluid transport system is purchased in plant engineering accompanied by engineering in a fluid transport system, for example.

The term "engineering in fluid transport system" means, for example, planning, designing, and procuring of a system for transporting a medium such as a gas, a liquid, or a solid, which is incorporated in a plant. The medium also includes a gas-liquid mixed system (for example, mixed system of steam and drain), a gas-solid mixed system (for example, air transport of pulverized coal), a liquid-solid mixed system (for example, slurry), and the like.

The term "plant component" means, for example, a fluid conduction element and equipment used in the fluid transport system. Examples of the fluid conduction element include a pipe, an expansion/contraction and flexible pipe (bellows, flexible tube, or the like), a bend pipe, an elbow, a joint, and a valve (manual valve, electric valve, solenoid valve, regulating valve, safety valve, check valve, or the like). Examples of the equipment include an instrument, a transport equipment, a strainer, an accumulator, a steam trap, and a temperature reducer. Examples of the instrument include a pressure sensor, a temperature sensor, and a flow meter. Examples of the transport equipment include a pump, a fan, a blower, a compressor, and a conveyor. Examples of a peripheral component include heat retention equipment (heat retention member), a pipe support member, a support cradle for equipment, and a steel frame. The peripheral component may further include an industrial machine that receives a fluid and discharges the fluid, such as a boiler, a chiller, a dehydrator, or a dryer.

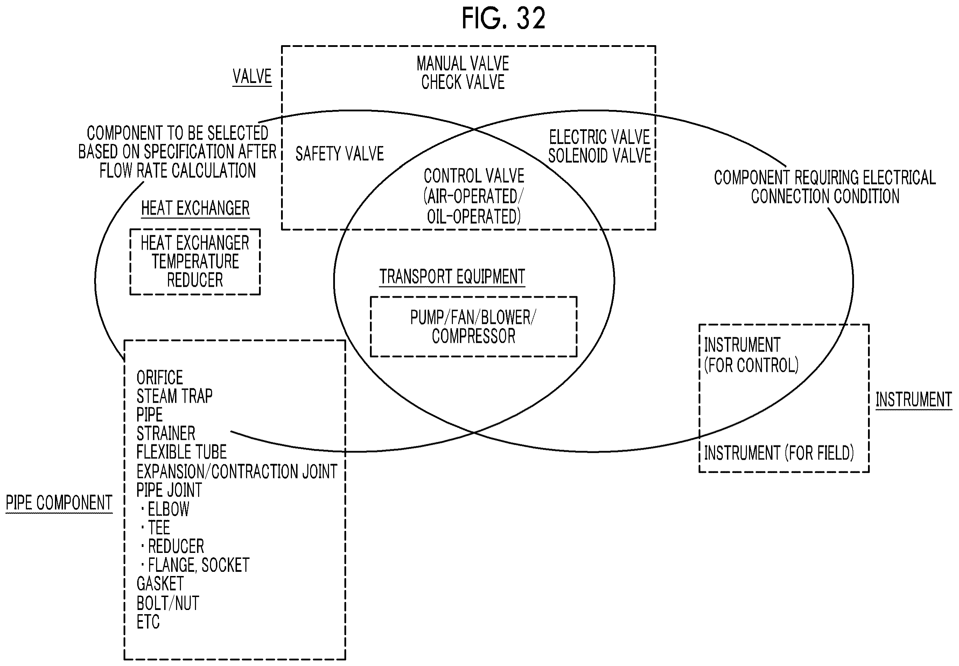

FIG. 32 shows a relationship between the plant components.

In the plant components, there is a component whose specification cannot be selected unless design is performed in consideration of a plant operation, such as a change range of a flow rate. Examples of such a plant component include pipe components, such as the safety valve, a control valve (including air-operated and oil-operated), a heat exchanger, a temperature reducer, an orifice, and the steam trap, and the transport equipment, such as the pump, the fan, the blower, and the compressor.

There is a plant component that requires electrical connection, such as a power supply or a measurement/control signal, and examples of such a plant component include the solenoid valve, the electric valve, the control valve (including air-operated and oil-operated), the pump, the fan, the blower, the compressor, the transport equipment such as the conveyor, and the instrument.

Hereinafter, the purchase assistance device 1 according to the present embodiment will be described with reference to drawings.

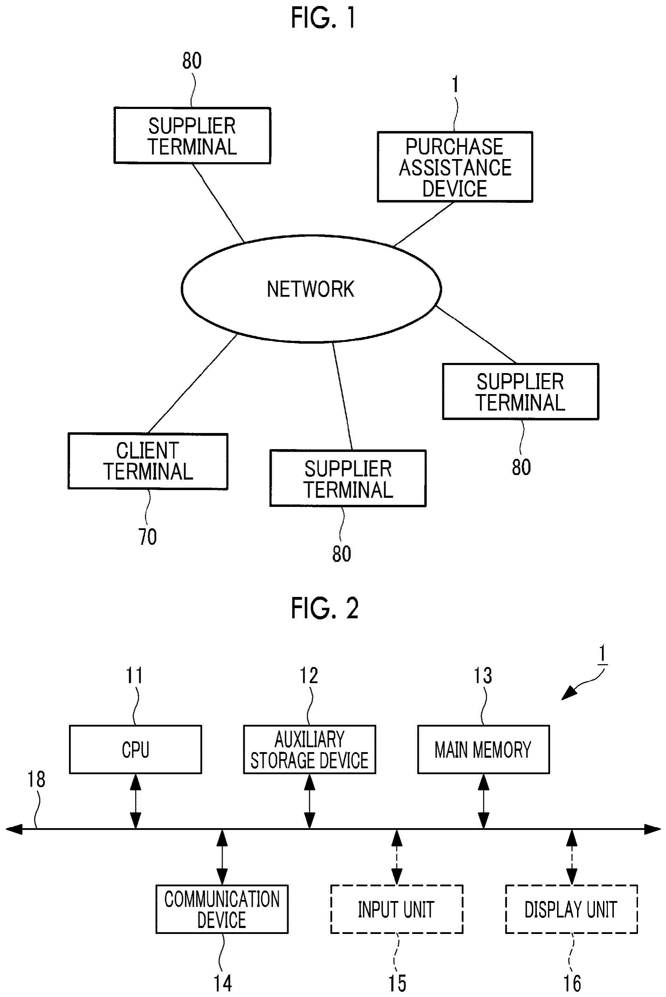

FIG. 1 is a diagram showing a network configuration of the purchase assistance device 1 according to the present embodiment. As shown in FIG. 1, the purchase assistance device 1 is connectable to a client terminal 70 and a supplier terminal 80 via a network, and is configured to be capable of transmitting and receiving information to and from each other. Examples of the network include Wi-Fi, a mobile communication system (3G, 4G, 5G, 6G, LTE, or the like), a wireless local area network (LAN), and a wired LAN.

In FIG. 1, one client terminal 70 and three supplier terminals 80 are exemplified, but the number of client terminals 70 and supplier terminals 80 connected to the purchase assistance device 1 is not limited to this example. For example, in order to improve a degree of freedom in selecting a component, it is preferable that a larger number of supplier terminals 80 are connected to the purchase assistance device 1.

In FIG. 1, the purchase assistance device 1, the client terminal 70, and the supplier terminal 80 are each connected via the same network, but the present disclosure is not limited to this example. For example, the network to which the purchase assistance device 1 and the client terminal 70 are connected may be different from the network to which the purchase assistance device 1 and the supplier terminal 80 are connected.

FIG. 2 is a schematic configuration diagram showing an example of a hardware configuration of the purchase assistance device 1. The purchase assistance device 1 is a so-called server (computer), and includes, as main configurations, a CPU (processor) 11, an auxiliary storage device 12 that stores a program (for example, purchase assistance program) executed by the CPU 11 and the like, a main memory 13 that functions as a work area at a time of executing each program, and a communication device 14 for connecting to the network, as shown in an example in FIG. 2, and each of these parts is connected via a bus 18. The purchase assistance device 1 may further include an input unit 15 such as a keyboard, a display unit 16, or the like. The auxiliary storage device 12 stores, for example, an OS for controlling the entire purchase assistance device 1, various drivers for performing a hardware operation of peripheral pieces of equipment, an application for realizing the purchase assistance device 1, and various pieces of data or files. Examples of the above auxiliary storage device 12 include a semiconductor memory, a magnetic disk, and a magneto-optical disk.

The client terminal 70 is an information processing device used by a user who desires to purchase the plant component, in the present embodiment, the fluid transport system configured to include a plurality of plant components. The client terminal 70 is, for example, a desktop PC, a notebook PC, a tablet PC, a tablet terminal, a mobile phone terminal, or a smartphone. Since the configuration of the client terminal 70 is known, a detailed description thereof will be omitted. However, the client terminal 70 includes a CPU, an auxiliary storage device, a main memory, a communication device, and an input unit, as in the purchase assistance device 1 described above. Further, the client terminal 70 includes a display unit (liquid crystal display, organic EL di splay, or the like). Further, the client terminal 70 may include a microphone and a speaker. The auxiliary storage device stores, for example, an OS for controlling the client terminal 70 such as Windows (registered trademark), iOS (registered trademark), or Android (registered trademark), various drivers for performing a hardware operation of peripheral pieces of equipment, an application for realizing functions of the client terminal 70 described below, and various pieces of data or files.

The supplier terminal 80 is an information processing device used by a supplier that sells the plant component. The term "supplier" means, for example, a company that manufactures and sells the plant component. In a case where a manufacturing company of the plant component sells its own products with a trading company as an agent, a combination of the manufacturing company of the plant component and the trading company is referred to as "supplier".

The supplier terminal 80 is, for example, a desktop PC, a notebook PC, a tablet PC, a tablet terminal, a mobile phone terminal, a smartphone, or the like. Since the configuration of the supplier terminal 80 is known, a detailed description thereof will be omitted. However, the supplier terminal 80 includes a CPU, an auxiliary storage device, a main memory, a communication device, and an input unit, as in the purchase assistance device 1 described above. Further, the supplier terminal 80 includes a display unit (liquid crystal display, organic EL display, or the like). Further, the supplier terminal 80 may include a microphone and a speaker. The auxiliary storage device stores, for example, an OS for controlling the supplier terminal 80 such as Windows (registered trademark), iOS (registered trademark), or Android (registered trademark), various drivers for performing a hardware operation of peripheral pieces of equipment, an application for realizing functions of the supplier terminal 80 described below, and various pieces of data or files.

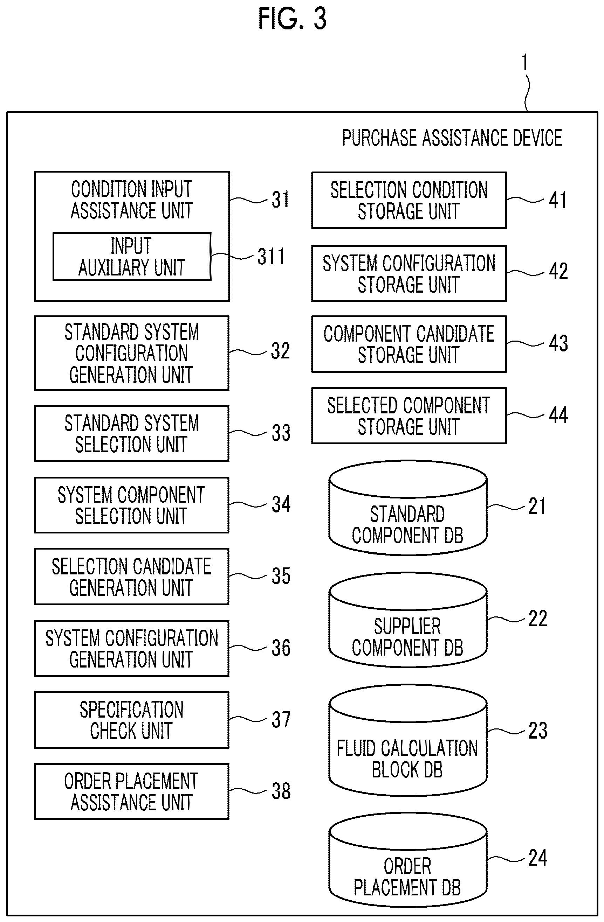

Next, functions of the purchase assistance device 1 according to the present embodiment will be described. FIG. 3 is a functional configuration diagram showing an example of the functions of the purchase assistance device 1 according to the present embodiment. A series of pieces of processing for realizing each function described below is stored in the auxiliary storage device 12 included in the purchase assistance device 1 as a program (for example, purchase assistance program) as an example, and the CPU 11 reads out the program into the main memory 13 and executes the program to realize various functions. The program may be installed in advance in the auxiliary storage device 12 included in the purchase assistance device 1, provided in a state of being stored in a computer-readable storage medium, or distributed via wired or wireless communication means. The computer-readable storage medium is the magnetic disk, the magneto-optical disk, a CD-ROM, a DVD-ROM, the semiconductor memory, or the like.

As shown in FIG. 3, the purchase assistance device 1 may include a standard component database 21 and a supplier component database 22. The purchase assistance device 1 may include a fluid calculation block database 23 and an order placement database 24. The purchase assistance device 1 may include a condition input assistance unit 31, a standard system configuration generation unit 32, a standard system selection unit 33, a system component selection unit 34, a selection candidate generation unit 35, a system configuration generation unit 36, a specification check unit 37, and an order placement assistance unit 38. The purchase assistance device 1 may include a selection condition storage unit 41, a system configuration storage unit 42, a component candidate storage unit 43, and a selected component storage unit 44, as storage areas for storing various types of data, in selecting a system component. Hereinafter, each unit will be described. For the sake of clarity, a case will be described as an example in which the fluid transport system for transporting water from an existing tank to another existing tank is newly installed, but the present disclosure is not limited thereto. The same can be applied for any fluid and any equipment and component through which the fluid enters and exits.

### [Standard Component Database 21]

The standard component database 21 stores information on a plurality of standard components related to the fluid transport system. For example, the standard component database 21 stores, for each plant component, representative specification information, which is information on a representative specification, in association with the function of the component. The representative specification information is, for example, decided in advance based on the specifications of each plant component provided by each supplier. For example, in a case of the pump, the representative specification is decided in advance based on a diameter (inlet/outlet) and a motor output.

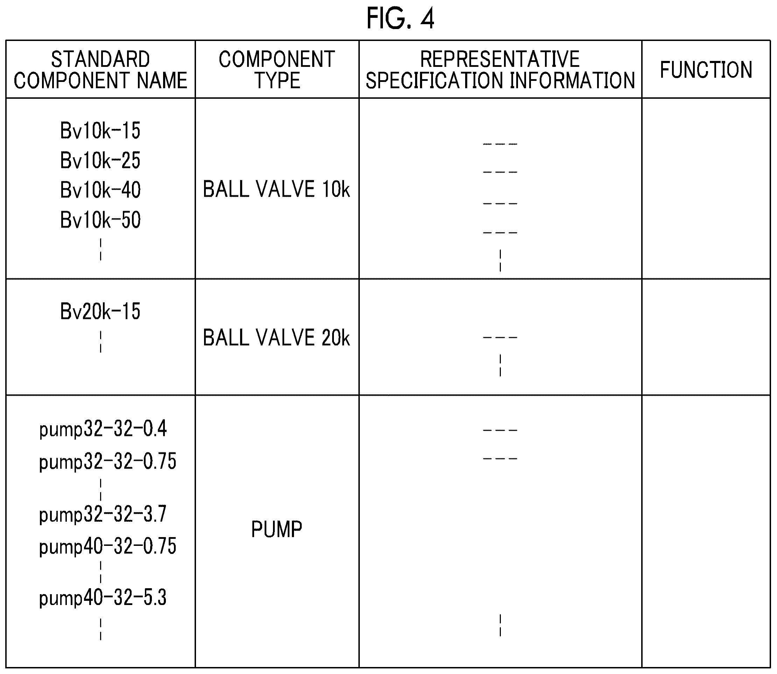

FIG. 4 shows an example of the information stored in the standard component database 21 according to the present embodiment. As shown in FIG. 4, a standard component name, a component type, the representative specification information, and a function are registered in the standard component database 21 in an associated manner. Here, the component type is distinguished from the representative specification information. However, the component type may be incorporated into the representative specification information, and the component type may be a part of the representative specification information.

The term "function" corresponds to "required function" input or the like by the condition input assistance unit 31 described below. The standard component associated with "function" corresponding to "required function", which is selected by the user in the condition input assistance unit 31 described below, is selected as an element component of the fluid transport system.

In the standard component database 21, for example, a method (hereinafter, referred to as "map format") may be adopted in which the representative specification information is stored and processed, with the standard component name as a key (name serving as mark), in association with the key to easily extract these pieces of information.

### [Supplier Component Database 22]

The supplier component database 22 stores information on a supplier component sold by the supplier. The supplier component database 22 stores, for example, a model number and specification data of the plant component sold by each supplier in association with each other, for each supplier. The model number of the plant component may be further associated with information on a product name, a price, and a delivery date. The model number of the plant component may be further associated with option information.

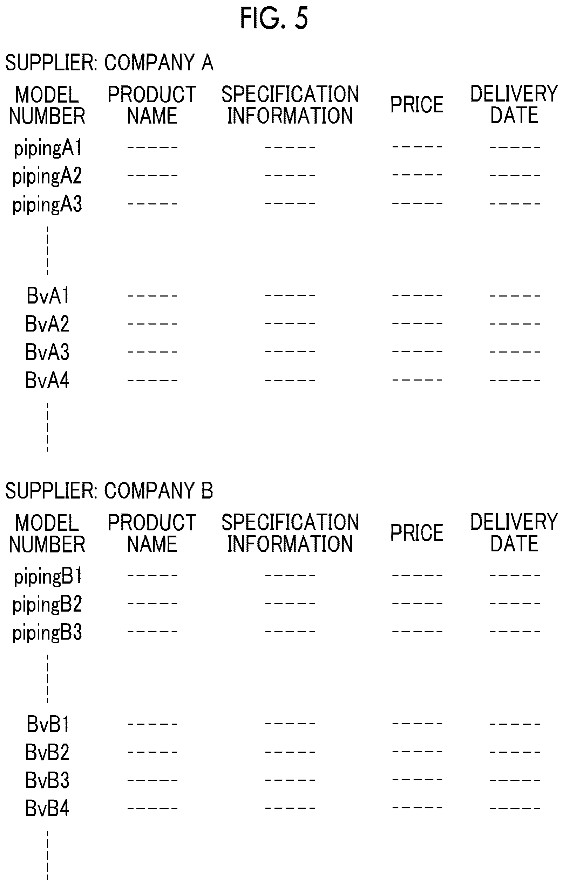

FIG. 5 shows an example of supplier component information stored in the supplier component database 22 according to the present embodiment. As shown in FIG. 5, the model number, the product name, the specification information, the price, and the delivery date are registered, for each supplier, in the supplier component database 22 in an associated manner. In the supplier component database 22, these pieces of information may be managed as data in the map format, for example.

Each supplier can update the information on the price and the delivery date at any time. Accordingly, it is possible to create a quotation sheet using the latest data. Accordingly, it is possible to provide the user with a highly reliable quotation sheet. In addition to the price of the plant component, various expenses required for product shipping may be registered in the price.

Examples of the option information include an optional product (consumable, special tool, or the like), a technical support service such as dispatch of an instructor at a time of installation, running adjustment during trial running, and troubleshooting, and a specification upgrade service (for example, corrosion overlay, high-grade coating, additional inspection, and an additional submitted drawing). Detailed information may be registered in the option information, in association with various options. Examples of the detailed information of a spare component include the delivery date, the price, and a replacement time. Examples of the detailed information of the technical support and the optional service include a provision time, the price, a feature, an advantage, and precautions.

### [Fluid Calculation Block Database 23]

The fluid calculation block database 23 stores a plurality of calculation blocks in which the standard components (for example, standard component names) are associated with standard calculation expressions. The fluid calculation block database 23 stores a plurality of calculation blocks in which the supplier components (for example, supplier model numbers) provided by the respective suppliers are associated with calculation expressions unique to the suppliers.

For example, each calculation block is registered with a pressure loss calculation expression for calculating an outlet pressure from a fluid pressure at a component inlet.

### [Order Placement Database 24]

The order placement database 24 stores, for example, information related to an order placement for each user. Examples of the information related to the order placement include a past order placement history, current order placement reservation information, an order placement status, and the like. With checking of contents of the order placement database 24, it is possible to understand what kind of plant component each user has purchased or is about to purchase.

### [Condition Input Assistance Unit 31]

The condition input assistance unit 31 acquires, as selection conditions, a required specification and a required function related to the fluid transport system that the user desires to purchase. For example, the required specification includes at least one of an inlet-side design temperature, an inlet-side design pressure, an outlet-side design temperature, and an outlet-side design pressure. The required specification may include an existing running condition. An example of the existing running condition includes at least one of a tank pressure, a water surface height, and a fluid temperature on an inlet side or a tank pressure on an outlet side.

The required function is a function that the user wants to provide in the fluid transport system, and examples thereof include a backflow prevention function, an inlet partition function, an outlet partition function, a pump inlet pressure measurement function, a pump outlet pressure measurement function, a flow rate measurement function, a foreign matter inflow prevention function into a pump, and a drain extraction function.

Further, the selection condition may include at least one of information on a type of fluid to be transported, a fluid driving source, a fluid transport start point, and a fluid transport end point, an applicable standard, and a pipe joint specification. The selection condition may include a selection desired condition and a consideration condition with priority of the plant component. An example of an option of the consideration condition with priority includes the flow rate or a pipe diameter. There is an advantage that the pressure loss in a case where the fluid flows is smaller as the pipe diameter is larger, and thus a loss during running can be reduced. On the other hand, there is a disadvantage that material costs are higher as the pipe diameter is larger, and thus a required space is larger. In planning the fluid transport system, there is a need to comprehensively evaluate the performance during running, material costs, spatial feasibility, delivery date, and the like to determine an optimal solution. The present selection desired condition and consideration condition with priority are intended to obtain a consideration result close to a condition desired by the user at an early stage.

Examples of the fluid type include air, gas, water, saturated water, saturated steam, and superheated steam. Examples of the fluid driving source include a fan, a pump, and potential energy.

Examples of the information on the fluid transport start point include start point coordinates, a connection destination, and a connection specification. Examples of the connection destination in a case where a liquid is transported include a pipe stand of a tank bottom (below liquid surface), a pipe stand of a tank body (below liquid surface), and a valve outlet (below liquid surface). Examples of the connection specification include a flange, screwing, a union, and welding.

Examples of the information on the fluid transport end point include end point coordinates, a connection destination, and a connection specification. Examples of the connection destination in a case where a liquid is transported include a pipe stand of a tank top (above liquid surface), a pipe stand of a tank body (above liquid surface), a pipe stand of the tank body (below liquid surface), a valve inlet (above liquid surface), and a valve inlet (below liquid surface). Examples of the connection specification include a flange, screwing, a union, and welding.

### Examples of the applicable standard include JIS, ASME, ANSI, and JPI.

Examples of the joint specification include a flange, screwing, a union, and welding.

Examples of the selection desired condition of the plant component include a required flow rate, a design pressure, a design temperature, a desired pipe diameter, a desired minimum pipe diameter, and a desired maximum pipe diameter.

Examples of the consideration condition with priority include a flow rate and a pipe diameter.

The selection condition may include an allowable latest delivery date, an allowable highest price, various types of information related to delivery such as a desired delivery destination, a packing specification, and a transportation method. In this manner, with inputting of the allowable latest delivery date or the allowable highest price as the selection condition, it is possible to eliminate the delivery date or the price that does not meet the user's desire. Accordingly, it is possible to improve the convenience of the user, and to reduce a calculation processing load in the purchase assistance device 1.

For example, the condition input assistance unit 31 generates screen data for causing the client terminal 70 to display a condition input screen for inputting these selection conditions, and transmits the screen data to the client terminal 70. The input of the selection condition may be performed in a dialogue form, for example. The input may be prompted using a diagram or the like such that even an inexperienced engineer can easily perform the input or can easily get an idea.

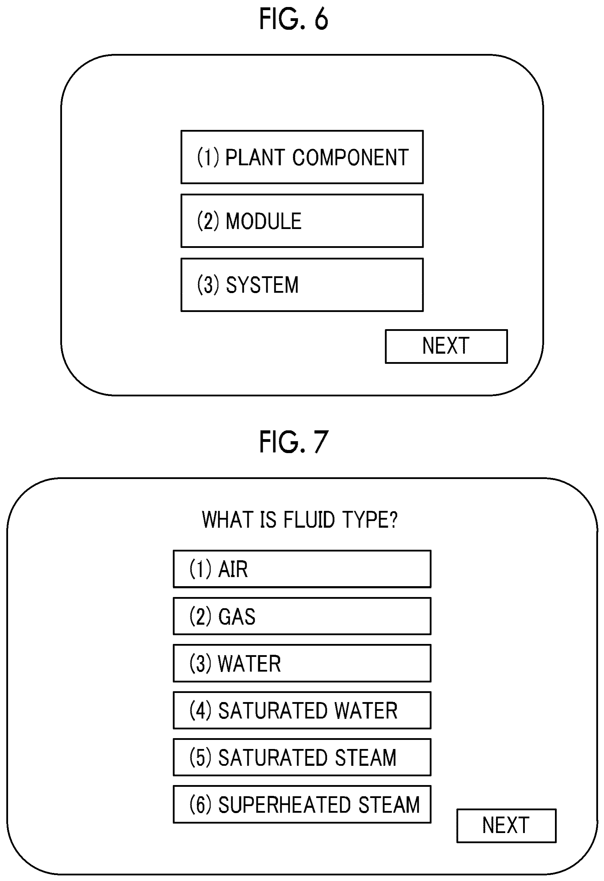

FIGS. 6 to 17 are diagrams showing examples of dialog-type condition input screens generated by the condition input assistance unit 31. The condition input assistance unit 31 causes the client terminal 70 to sequentially display the condition input screens shown in FIGS. 6 to 17 to cause the user to input required conditions and acquire information necessary for the selection of the plant components configuring the fluid transport system.

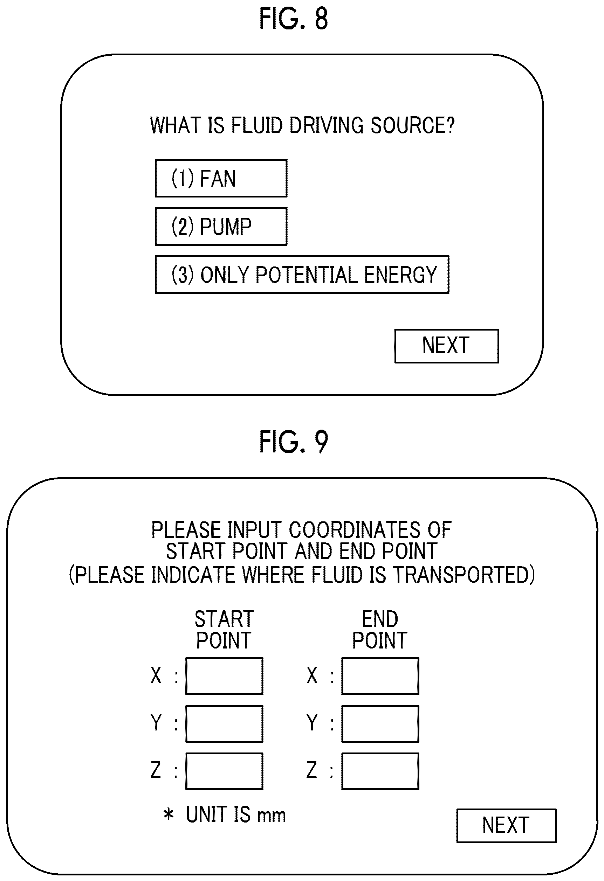

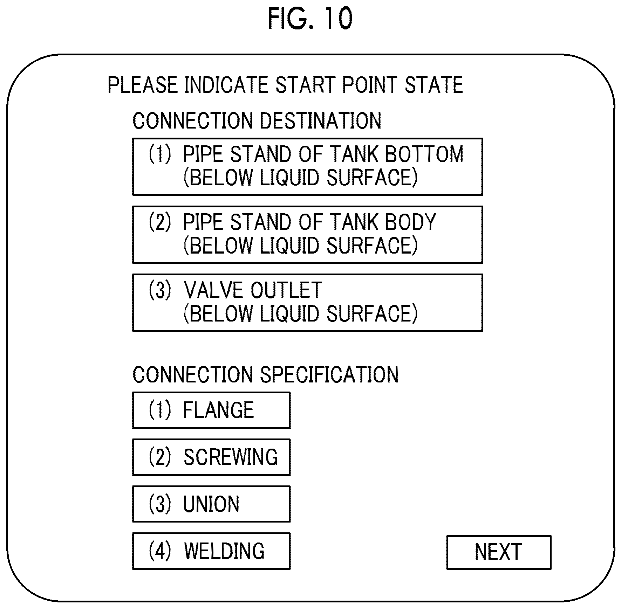

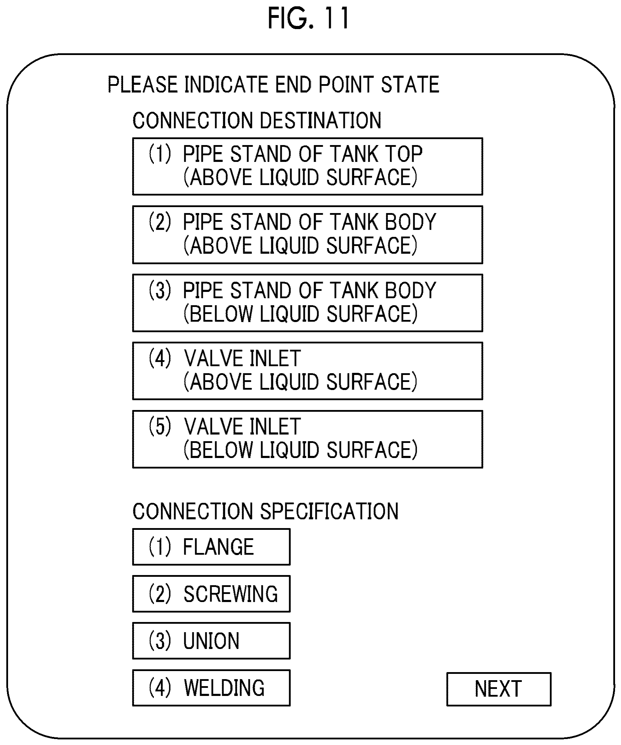

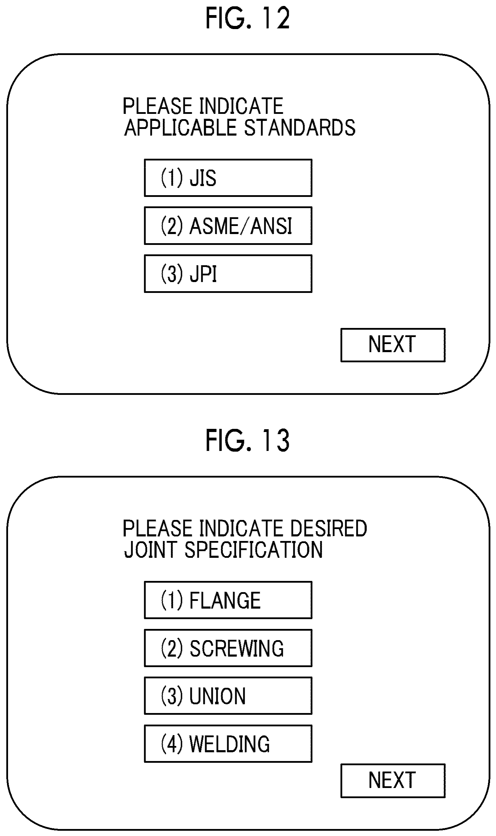

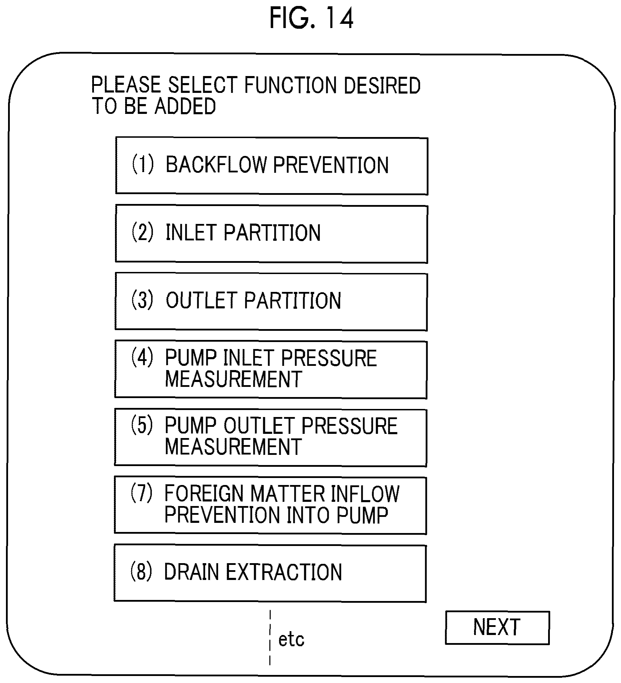

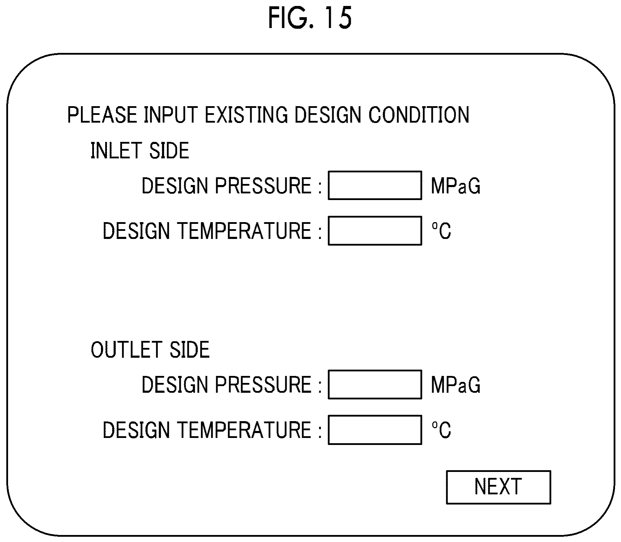

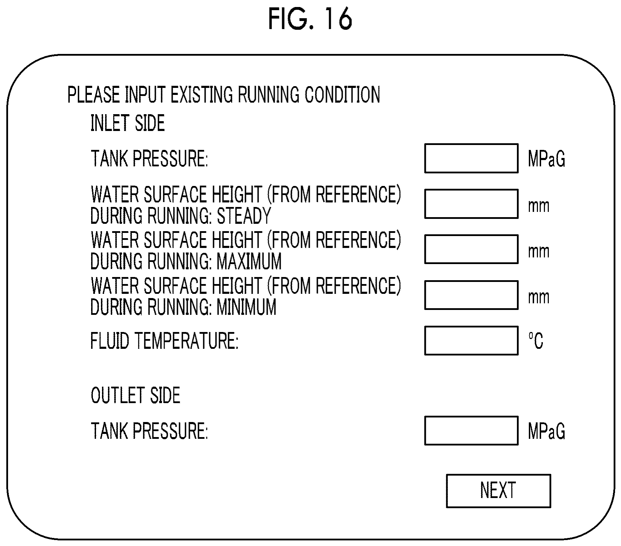

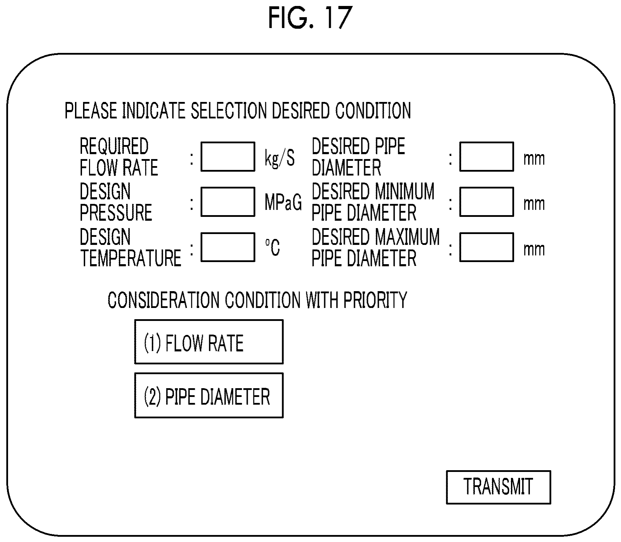

FIG. 6 is the condition input screen for selecting a purchase target, FIG. 7 is the condition input screen for selecting the fluid type, FIG. 8 is the condition input screen for selecting the fluid driving source, FIG. 9 is the condition input screen for inputting the coordinates of the fluid transport start point and the fluid transport end point, FIG. 10 is the condition input screen for selecting the connection destination and the connection specification of the fluid transport start point, FIG. 11 is the condition input screen for selecting the connection destination and the connection specification of the fluid transport end point, FIG. 12 is the condition input screen for selecting the applicable standard, FIG. 13 is the condition input screen for selecting the joint specification, FIG. 14 is the condition input screen for selecting an additional function (required function), FIG. 15 is the condition input screen for inputting an existing design condition, FIG. 16 is the condition input screen for inputting an existing running condition, and FIG. 17 is the condition input screen for inputting the selection desired condition and the consideration condition with priority. For the sake of clarity, since the case is described as an example in which the fluid transport system for transporting water from the existing tank to another existing tank is newly installed, the existing design condition and the existing running condition are input in FIGS. 15 and 16. However, in a case of new installation, a new design condition and a new running condition may be input.

A plurality of input modes may be provided for the input of the selection condition. For example, the plurality of input modes may be presented to the user, and any one of the plurality of input modes may be selected by the user. The condition input assistance unit 31 may generate the condition input screen in accordance with the input mode selected by the user, and transmit the generated condition input screen to the client terminal 70.

Examples of the input mode include a detailed input mode, a simple input mode, and a model number input mode. The detail input mode is generally a mode in which all conditions required in a case where the supplier selects a component are input. The detail input mode is for a user who is familiar with engineering in the fluid transport system. The simple input mode is a mode in which input items are limited to main items for an inexperienced user. For example, some of the conditions input in the detail input mode are omitted in the simple input mode. The model number input mode is a mode in which a supplier name or a model number is input, and is a mode for a user who wants to purchase the same component as an existing plant component or a user who investigates a supplier catalog or the like in advance and decides a desired model number.

In this manner, with the configuration in which the plurality of input modes are provided and the user can select a desired input mode, it is possible to provide a service according to the user's engineering ability and needs.

### [Input Auxiliary Unit]

The condition input assistance unit 31 may include, for example, an input auxiliary unit 311 (refer to FIG. 3). The input auxiliary unit 311 temporarily inputs the selection condition that is not input by the user among the plurality of selection conditions, based on past accumulated data or an initial value set in advance.

For example, the input auxiliary unit 311 holds initial values related to the design condition or the running condition in advance, and performs temporary input of the initial values in a case where the selection condition is not input to the design condition or the running condition. A representative value based on a past record value or the like may be temporarily input, instead of the initial value.

Furthermore, the input auxiliary unit 311 may ask the user a question according to a predetermined question flow and cause the user to input the selection condition that is insufficient, in a dialogue form in which the user answers the question. In a case where the input auxiliary unit 311 performs the temporary input, the temporarily input condition may be presented to the user, and the user may be caused to check whether or not the temporarily input condition deviates from the user's assumption.

For example, since the plant component has not only a constraint condition linked to the component itself, such as a shape and strength, but also a constraint condition for a fluid flowing inside the component, a certain degree of experience is required to select an appropriate component. For this reason, a user with little experience may not know what kind of conditions to set, and thus may have a difficulty in setting the condition on the user's own initiative. In such a case, with the provision of the input auxiliary unit 311 to assist the user in performing the input, even a user who has little experience in engineering in the fluid transport system can input an appropriate condition required for arrangement of the plant component.

### [Selection Condition Storage Unit 41]

The selection condition storage unit 41 stores the selection conditions such as the required specification and the required function, which are acquired by the condition input assistance unit 31. For example, the selection condition may be stored in the map format. For example, the conditions input by the user for respective main items, such as an inlet condition, an outlet condition, the required function, a design pressure and temperature, and the required specification, are stored in the selection condition in association with each other. A predetermined calculation may be performed based on the condition acquired from the user, and thus new information may be added to the selection condition. For example, in the selection of the plant component, a nominal pressure (temperature/pressure rating) is calculated from a set pressure and a set temperature, and the component is selected using the nominal pressure. Therefore, the selection condition may include the nominal pressure (temperature/pressure rating) based on the set pressure and the set temperature acquired from the client terminal 70.

### [Standard System Configuration Generation Unit 32]

The standard system configuration generation unit 32 specifies the plurality of standard components configuring the fluid transport system from the standard component database 21, based on the selection condition stored in the selection condition storage unit 41, to generate a standard system configuration diagram in which the specified plurality of standard components are connected to each other. Specifically, the standard system configuration generation unit 32 disposes the specified plurality of standard components on a fluid transport path from the transport start point to the transport end point to generate a standard system configuration diagram, which is a system configuration diagram of the fluid transport system.

Specifically, the standard system configuration generation unit 32 acquires, from the standard component database 21, a corresponding standard component based on the information on the selection conditions (for example, required function, pipe diameter, rating, and connection form). The acquired standard components are sequentially disposed on the fluid transport path to generate the standard system configuration diagram. In this case, the fluid transport path is generated based on start point coordinates, end point coordinates, and an existing specification, and is connected by a pipe based on a value input as a desired pipe diameter from a start point to an end point.

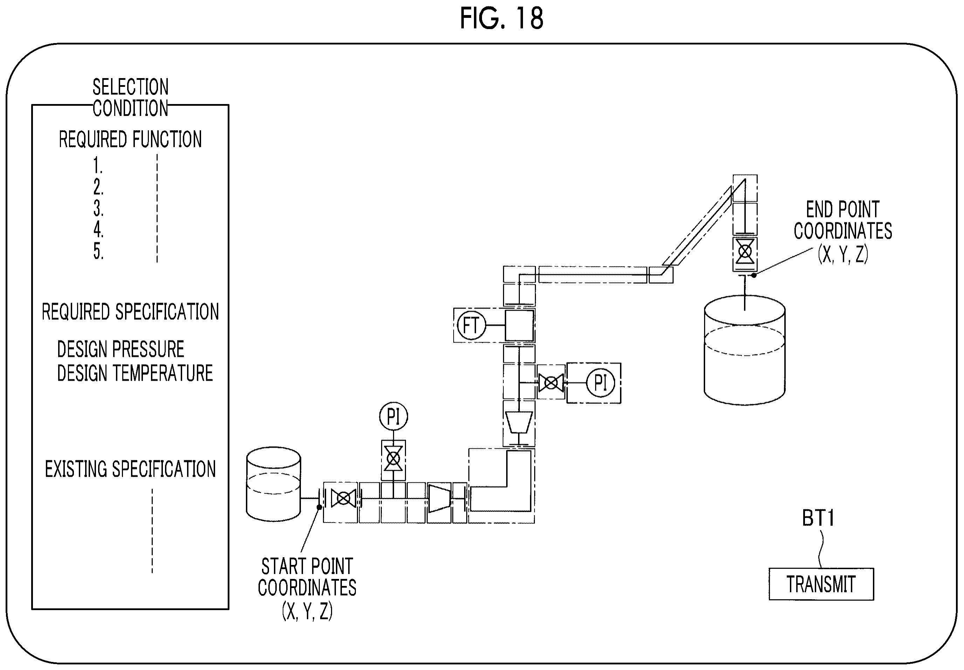

In a case where the standard system configuration diagram is generated, the standard system configuration generation unit 32 generates a standard system configuration adjustment screen including the standard system configuration diagram, and causes a display unit of the client terminal 70 to display the screen data. FIG. 18 is a diagram showing an example of the standard system configuration adjustment screen. The standard system configuration adjustment screen displays the standard system configuration diagram generated based on the selection condition, together with information such as the required function, the required specification, and the existing specification, which are the selection conditions of the standard system configuration diagram. In the standard system configuration diagram shown in FIG. 18, each block surrounded by a dashed line is a component block corresponding to each standard component.

On the standard system configuration adjustment screen, the standard system configuration diagram is configured such that the user can perform at least one of pipe addition, a route change, changes in a position and a disposition order of the component block, and addition and deletion of the required function. Although the system configuration diagram is shown as a two-dimensional system configuration diagram in FIG. 18, for example, the system configuration diagram may be displayed as a three-dimensional system configuration diagram such as an isometric view or a 3D display using an orthographic projection view.

The user performs an operation, such as moving the component block or changing a dimension of the pipe connecting the component blocks on the standard system configuration adjustment screen, to draw a desired system configuration diagram, and the user presses a transmission button BT1 in a case where the drawing is completed. Accordingly, information on the system configuration diagram confirmed by the user is transmitted to the purchase assistance device 1.

In a case where a drawing (for example, two-dimensional CAD data or three-dimensional CAD data) and the like of the peripheral component in which the fluid transport system is installed are provided to the purchase assistance device 1, the peripheral component and the like may be displayed as a background by being included in the standard system configuration diagram. In this manner, with the display of the peripheral component and the like together as a background, it is possible to dispose the standard component at an appropriate position in consideration of the disposition of the standard components with respect to the peripheral component.

For example, there is a case where the plant component has a constraint on a facility configuration of upstream and downstream facilities or a straight pipe length. For example, an orifice flow meter has a constraint that the straight pipe length of a certain length is ensured before and after the orifice flow meter in order to keep a measurement error within a reference. In a case where different types of instruments are arranged, there is a desirable installation order. For example, since the temperature sensor is inserted into the fluid at a measurement point, the temperature sensor may be a factor that disturbs a fluid flow, which may affect a measurement results of the pressure or the flow rate. For this reason, there is a constraint such as installation of the temperature sensor on a downstream side of the pressure sensor or the flow meter. In an electromagnetic flow meter, since a flow rate measurement unit needs to be always filled with a fluid, there is a constraint on a pipe route. In the safety valve, in a case where the pressure loss in a back flow is too high, in other words, in a case where the pipe is too thin or too long, a planned blowout amount cannot be ensured, and thus there is a constraint on a length or a diameter of the pipe.

Thus, the standard system configuration generation unit 32 may have a function of determining appropriateness of the disposition of the standard component and a positional relationship with surrounding components, in consideration of the above constraint conditions, and displaying, in different colors, the standard component that needs to be changed or the standard component that is better to be changed, according to the importance, in the standard system configuration diagram. In this manner, with the assistance to the user in changing the position of the standard component and the like, it is possible to contribute to prevention of a problem and reduction of consideration man-hours.

The standard system configuration generation unit 32 may have a function of proposing a change in the standard component. An example of the proposal includes that although a dimension does not match in a case of a flange joint, the dimension falls within a defined range in a case where the joint is changed to a welded joint.

Further, the standard system configuration generation unit 32 may have a function of graphically proposing, on the current standard system configuration adjustment screen, an improvement plan for the pipe route in which the price is lower or almost unchanged. One or a plurality of evaluation axes here may be selectable by the user, and the user may be able to select not only the price but also the delivery date, low pressure loss, a conformity degree, a recommendation degree, pipe length shortness, and the like. The improvement plan may be graphically proposed based on a result of machine learning. Accordingly, it is possible to provide the user with an optimal pipe route, and thus to reduce the user's effort.

Further, the standard system configuration generation unit 32 may have a function of expressing a predicted result of a change in evaluation of the evaluation axis set in advance, as a difference in color around the selected plant component, in a case where the plant component is selected in moving a position of a certain plant component. In this manner, with the visual presentation of the movement destination of the plant component, the user can easily decide the disposition of the standard component. Examples of the evaluation axis include a possibility of price improvement, no price fluctuation, and a concern level of price fluctuation: small, medium, and large. In a case where there is a region where the movement is not possible based on an instrument specification, the region may be visually presented.

Further, the standard system configuration generation unit 32 may have a function of increasing the evaluation of the evaluation axis set in advance or proposing the improvement plan for the evaluation axis. Accordingly, not only an idea contributing to the optimization of the spatial disposition but also the improvement by a specification review of the plant component can be expected. For example, such a proposal can be realized by past cases accumulated by the purchase assistance device 1, the result of machine learning, or a typical improvement pattern registered in advance.

Further, the standard system configuration generation unit 32 may have a function of quoting a typical man-hours, from the specification of the joint of each selected standard component or the information on the pipe route, and quoting a construction cost by performing a calculation with a general man-hours unit price to display the construction cost together with a price of the system arrangement as a sum. Further, the quoted man-hours may be one of the evaluation axes. In this manner, with the preparation of the evaluation axes including the construction cost, it is possible to contribute to a reduction in a total cost in a case where the user introduces a system.

### [System Configuration Storage Unit 42]

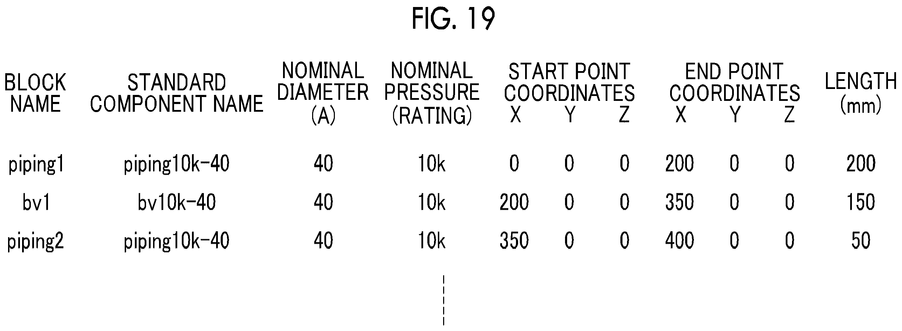

The system configuration storage unit 42 stores information based on the standard system configuration diagram confirmed by the user. FIG. 19 is a diagram showing an example of the information stored in the system configuration storage unit 42. As shown in FIG. 19, the system configuration storage unit 42 stores information on each standard component configuring the fluid transport system in a list in order from the top in a connection order of the standard component. The information on each standard component may include a block name, a standard component name, a pipe nominal diameter (dimension), a nominal pressure (temperature/pressure rating), start point coordinates, end point coordinates, and a length. These pieces of information are created based on the specification information or the like of each standard component stored in the standard component database 21. The system configuration storage unit 42 may further store a reference delivery date, a reference price, and the like in association with each other.

In this manner, the system configuration storage unit 42 is registered with pieces of information (dimension (nominal diameter), nominal pressure (temperature/pressure rating), coordinate information, and the like) necessary for the component selection, which is subsequent processing, in an associated manner.

### [Standard System Selection Unit 33]

The standard system selection unit 33 selects the plurality of standard components each having different specifications for a main standard component set in advance, among respective standard components stored in the system configuration storage unit 42, to generate a plurality of standard system configuration candidates. Examples of the main standard component include the pump and the pipe.

Further, the standard system selection unit 33 acquires, for each of the plurality of standard system configuration candidates, the calculation block corresponding to the standard component, which is the element component of the standard system configuration, from the fluid calculation block database 23, and connects the acquired calculation blocks in accordance with a connection order to generate a calculation block chain. The standard system selection unit 33 provides an input condition, for example, inlet conditions of pressure, temperature, and flow rate, to the calculation block chain to calculate an output condition of the fluid transport system, for example, outlet conditions of pressure, temperature, and flow rate.

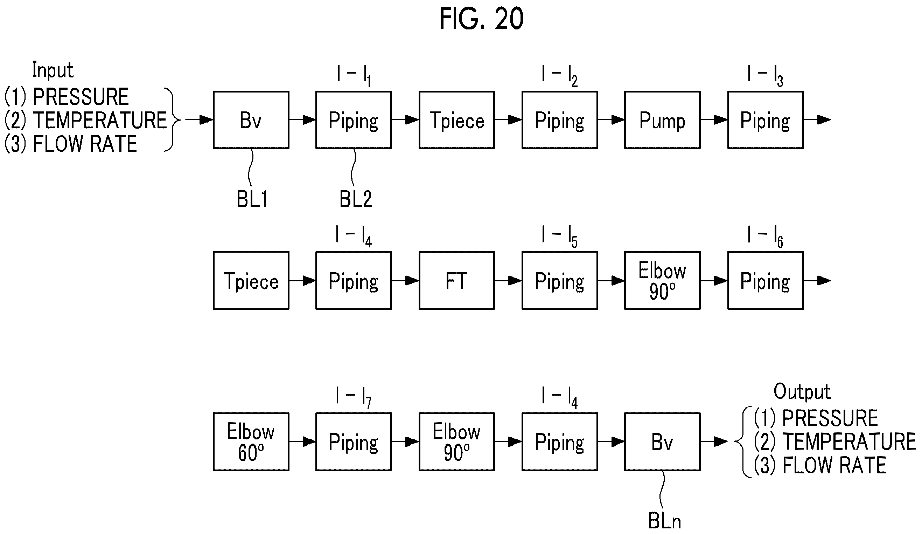

FIG. 20 shows an example of the calculation block chain. In FIG. 20, for example, "Piping" indicates a standard pipe calculation block, "Bv" indicates a standard ball valve calculation block, "Tpiece" indicates a standard T-piece calculation block, "Pump" indicates a standard pump calculation block (including reducer for diameter adjustment), "FT" indicates a standard flow meter calculation block, and "Elbow" indicates a standard elbow calculation block.

The standard system selection unit 33 inputs the fluid input condition, specifically, the pressure, the temperature, and the flow rate, to an initial calculation block BL1 of the calculation block chain. The outlet condition calculated in the initial calculation block BL1 is provided as the input condition to a next calculation block BL2. The calculation of the outlet condition is sequentially performed in the order in which the calculation blocks are connected to each other to calculate the output condition in a calculation block BLn serving as a final end point. This output condition is the outlet condition of the entire system in the standard system configuration candidate. Although the temperature, the flow rate, and the pressure are input as the inlet conditions, only the pressure loss may be calculated on the assumption that the temperature and the flow rate are constant from the inlet to the outlet.

The standard system selection unit 33 generates, for each of the plurality of standard system configuration candidates, the calculation block chain and calculates the outlet condition of each fluid transport system.

The standard system selection unit 33 may have other calculation functions such as a fluid flow diagnosis function at a highest reaching point, a net positive suction head (NPSH) calculation function, a hammer diagnosis function, a noise calculation function, and a validity diagnosis function of the design pressure and temperature of each component.

The fluid flow diagnosis function at the highest reaching point specifies, from coordinate information of each standard component, coordinate information of the highest reaching point of the fluid transport system and a component at the highest reaching point, and determines whether or not the pressure conditions of the inlet condition and the outlet condition are equal to or larger than a predetermined threshold value in the calculation block corresponding to the component. Accordingly, in a case where the fluid is transported by the selected standard component, it is possible to check whether or not the flow rate equal to or larger than a minimum flow rate can be ensured for the component at the highest reaching point. In a case where determination is made that the minimum flow rate is not ensured, for example, the specification of the pump in the standard system configuration candidate may be changed to perform adjustment such that the minimum flow rate can be ensured for the component at the highest reaching point.

The NPSH calculation function is to determine whether or not the constraint condition of the pump or the compressor on a suction side is satisfied, the noise calculation function is to determine whether or not noise is equal to or less than a predetermined threshold value, and the hammer diagnosis function is to determine whether or not there is a possibility that a hammer phenomenon (water hammer phenomenon) occurs.

The validity diagnosis function of the design pressure and temperature of each component is to determine whether or not a running pressure and temperature for each component falls below the design pressure and temperature, in other words, whether or not the running condition falls within a range of the nominal pressure of each component. For example, in a case where the pressure is boosted by the pump, the nominal pressure of the plant component after the pump may change depending on the pump performance. **In** consideration of such a case, with the diagnosis of the validity of the design pressure and temperature of each component, it is possible to notify the user of the necessity of selecting an appropriate component, for example, a component that withstands a higher pressure.

The standard system selection unit 33 generates, for each standard system configuration candidate, a standard system selection screen in which information on the main standard component (pump specification, flow rate, and reference pipe nominal diameter) and relationship characteristics between the flow rate and a head are shown, and transmits the generated standard system selection screen to the client terminal 70.

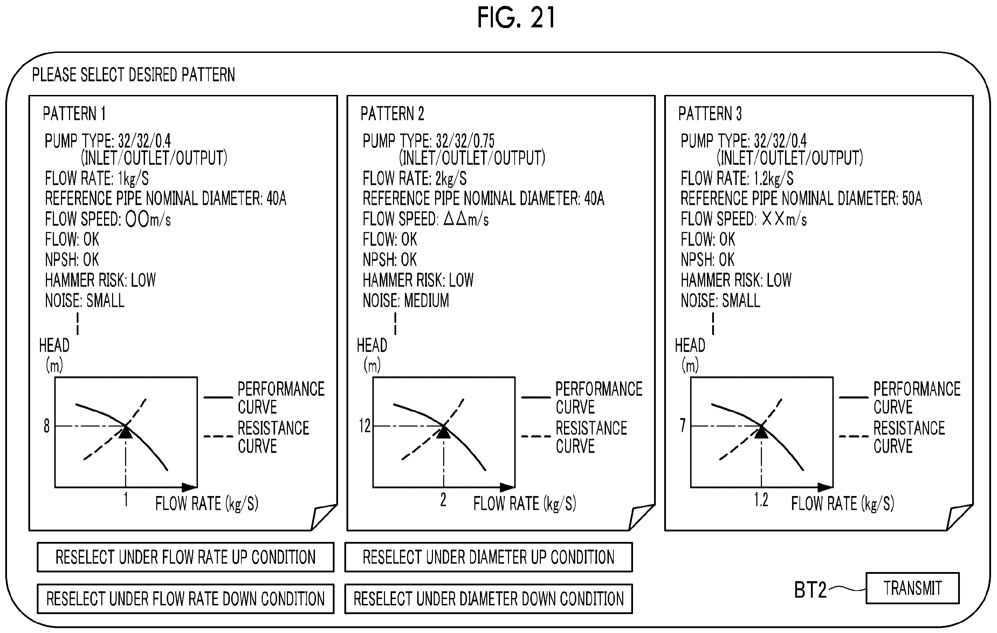

FIG. 21 is a diagram showing an example of the standard system selection screen. The standard system selection screen displays an assumed running condition for each standard system configuration candidate. Specifically, the standard system selection screen displays a pump type, a flow rate, a reference pipe nominal diameter, and a flow speed value for each standard system configuration candidate. Diagnosis results obtained by the respective calculation functions, for example, a diagnosis result of whether or not the minimum flow rate can be ensured at the highest reaching point, a calculation result of NPSH, a hammer risk, a noise level, a validity diagnosis result of the design pressure and temperature of each component, and the like may also be displayed as one of factors for determination.

With the display of the diagnosis result of each calculation function in this manner, it is possible to provide the user with the factor for determination based on various viewpoints, and thus to cause the user to select the standard system configuration candidate that best meets the needs.

Further, the standard system selection screen may display information such as price and delivery date together.

The standard system selection screen may display a running point of the entire system. In FIG. 21, the running point of the entire system is displayed on a graph (for example, as an intersection between performance curve and resistance curve on Q (flow rate)-H (head) plane). The running point is calculated in consideration of the output condition of the system calculated in the calculation block chain described above.

In this manner, with the presentation of the running point of the entire system and the specification information to the user, the user can select and procure the set of the plurality of plant components configuring the fluid transport system with the same feeling as selecting a single plant component. Consideration can be made by including a surrounding facility configuration.

Further, in a case where there is no desired standard system configuration candidate among the presented standard system configuration candidates, the standard system selection screen may be provided with an input unit for issuing an instruction to increase or decrease the flow rate condition or an input unit for increasing or decreasing the pipe diameter condition. In a case where these input units are operated, the standard component is specified again according to the input instruction, the plurality of standard system configuration candidates are newly generated, and the calculation of the outlet condition and the like described above is performed for each standard system configuration candidate.

On the standard system selection screen, the user selects any standard system configuration candidate that meets the needs, and presses a transmission button BT2. Accordingly, the information on the standard system configuration candidate selected by the user is transmitted to the purchase assistance device 1.

The standard system selection unit 33 updates the information of the system configuration storage unit 42 based on the information on the standard system configuration candidate selected by the user. That is, various types of information shown in FIG. 19 (name, specification data, and the like of each standard component name configuring fluid transport system) are updated based on the information on the standard system configuration candidate selected by the user.

### [System Component Selection Unit 34]

The system component selection unit 34 selects, from the supplier component database 22, one or a plurality of supplier components corresponding to each standard component configuring the standard system configuration diagram. Specifically, the system component selection unit 34 selects, from the supplier component database 22, the plant component (hereinafter, referred to as "supplier component") corresponding to each standard component stored in the system configuration storage unit 42. In this case, the system component selection unit 34 may select, for each standard component, the plurality of supplier components sold by different suppliers.

For example, the system component selection unit 34 selects, for each standard component, the plurality of supplier components that match the conditions based on the standard component name and the specification data (for example, design pressure, design temperature, and nominal diameter), and acquires the price, delivery date, and option information of the supplier components from the supplier component database 22. For example, in a case of the valve, the supplier component is selected based on the nominal pressure and a size (for example, nominal diameter).

Here, a unique requirement may be necessary depending on suppliers in a case where the supplier component is selected. In this case, it is necessary to inquire the user for the information. In such a case, the system component selection unit 34 may cause the client terminal 70 to display an input form or the like for inputting necessary information to inquire the user about an additional input.

In this manner, in a case where the system component selection unit 34 selects one or the plurality of supplier components (for example, supplier components of company A, company B, and company C) corresponding to each standard component such as the pipe, a ball valve, and the pump, the information on the selected supplier components is stored in the component candidate storage unit 43 in association with each standard component.

### [Component Candidate Storage Unit 43]

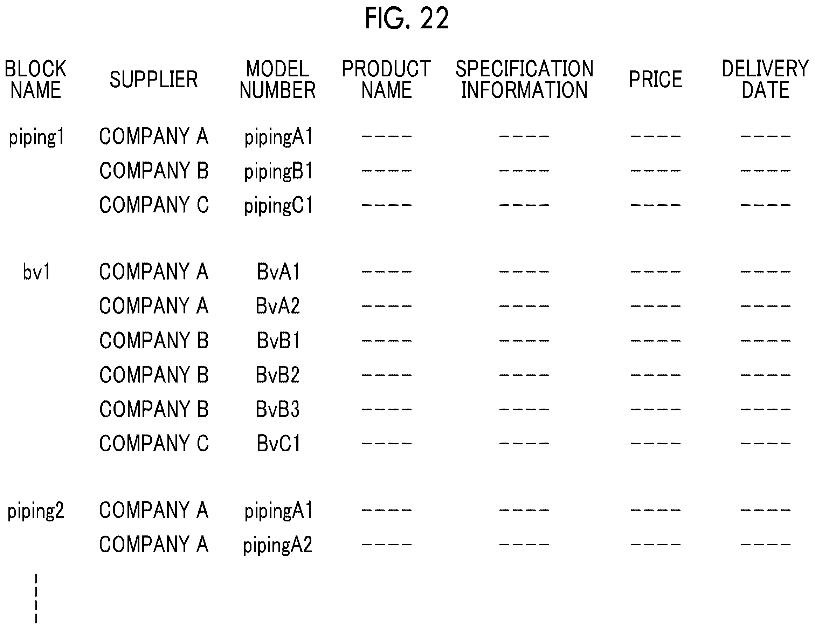

The component candidate storage unit 43 stores the information on the supplier component in association with each block configuring the standard system configuration diagram. FIG. 22 is a diagram showing an example of data stored in the component candidate storage unit 43. As shown in FIG. 22, the component candidate storage unit 43 stores the supplier, the model number, the product name, the specification information, the price, and the delivery date information, in association with a constituent element (block name). As the supplier, the model number, the product name, the specification information, the price, and the delivery date information, the information acquired from the supplier component database 22 may be written (refer to FIG. 5).

### [Selection Candidate Generation Unit 35]

The selection candidate generation unit 35 generates a plurality of system configuration candidates, which are combinations of the supplier components configuring the fluid transport system, based on the plurality of supplier components stored in the component candidate storage unit 43, generates a comparison selection screen in which the plurality of system configuration candidates are shown in a comparable manner, and provides the generated comparison selection screen to the client terminal 70.

Specifically, the selection candidate generation unit 35 generates the plurality of system configuration candidates according to a predetermined evaluation criterion, from the plurality of supplier components stored in the component candidate storage unit 43. Examples of the evaluation criterion include a lowest price, a shortest delivery date, a low price and a short delivery date, and recommendation.

The lowest price is a combination candidate of the supplier components having a lowest total amount of money of the plant components configuring the fluid transport system, and the shortest delivery date is a combination of the supplier components having an earliest delivery date of the plant components configuring the fluid transport system. The low price and the short delivery date are evaluated from both the price and the delivery date, and for example, are a combination of the supplier components having a highest evaluation value that is obtained by substituting, with the price and the delivery date as parameters, each value of the price and the delivery date into an evaluation value calculation expression. The recommendation is, for example, a combination of the components having a highest comprehensive evaluation value that is obtained by adding another evaluation index, in addition to the price and the delivery date. For example, each evaluation value of the price, the delivery date, and word-of-mouth (past evaluation information by user) is substituted into a predetermined evaluation value calculation expression to calculate a comprehensive evaluation value for each supplier component, and thus specify a combination of the supplier components having a highest calculated comprehensive evaluation value.

The evaluation value calculation expression can be set randomly. For example, each item may be evaluated on a full score of 10 points, and a value obtained by adding evaluated scores may be employed, or a weighting coefficient is set for each item, and a value obtained by adding a product of a score of each item and the weighting coefficient thereof may be employed. Machine learning may be performed using a past record or a past similar design record of an operator of the purchase assistance device 1, a past record obtained by the operation of the purchase assistance device 1, or the like, and the system configuration candidates may be shown in a recommendation order from the system configuration candidate closest to a machine learning result.

In a case where the plurality of system configuration candidates are generated based on each evaluation criterion, the selection candidate generation unit 35 generates the comparison selection screen in which the plurality of system configuration candidates are shown in a comparable manner, and transmits the generated comparison selection screen to the client terminal 70.

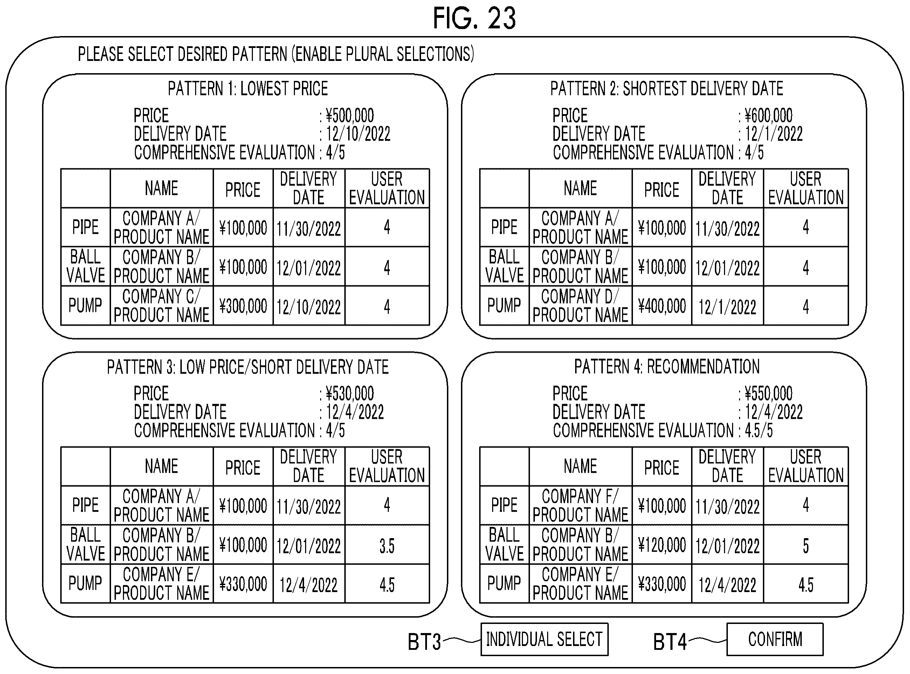

FIG. 23 is a diagram showing an example of the comparison selection screen. The comparison selection screen shown in FIG. 23 shows the system configuration candidate of the lowest price as pattern 1, the system configuration candidate of the shortest delivery date as pattern 2, the system configuration candidate evaluated from both the low price and the short delivery date as pattern 3, and the system configuration candidate of the recommendation as pattern 4. For each system configuration candidate, the supplier, the product name, the price, the delivery date, and the user evaluation of each plant component are displayed. FIG. 23 shows the pipe, the ball valve, and the pump as examples of the plant components. On the comparison selection screen, the user can select one or a plurality of desired patterns (system configuration candidates).

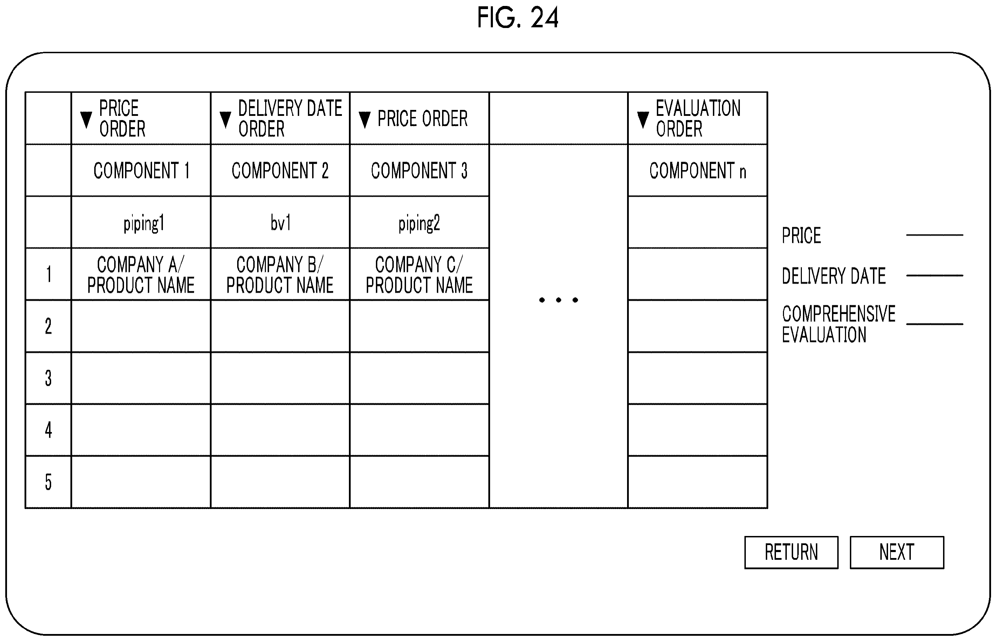

The comparison selection screen is provided with an individual selection button BT3. The individual selection button BT3 is for transitioning to an individual selection screen in which the user can select each plant component for each system configuration candidate. FIG. 24 shows an example of the individual selection screen. The individual selection screen displays the information on the supplier component for each constituent element configuring the fluid transport system, in other words, for each block shown in the standard system configuration diagram. Each supplier component can be displayed in a price order, a delivery date order, and the recommendation order. The display order can be switched by tab switching. In this manner, the user can select any pattern (system configuration candidate) on the comparison selection screen shown in FIG. 23, and then press the individual selection button BT3 to change (customize) each supplier component in the selected pattern to a desired supplier component.

The user customizes an individual component of each system configuration candidate in the individual selection screen as necessary, and then selects one or the plurality of system configuration candidates in the comparison selection screen and presses a confirmation button BT4.

Accordingly, the information on one or the plurality of system configuration candidates selected by the user is transmitted to the purchase assistance device 1.

The information on one or the plurality of system configuration candidates selected by the user in this manner is stored, for each system configuration candidate, in the selected component storage unit 44 with the constituent element of the system configuration candidate and the information on the supplier component associated with each other.

The selection candidate generation unit 35 may display, for example, an evaluation value such as a carbon dioxide emission amount or a greenhouse gas emission amount of the system, as one index in a case where the user selects the system configuration candidate. As a target of the evaluation values, any one of during running and other than during running may be employed, or both may be employed. With both as the target, it is possible to provide the evaluation values throughout a product life cycle.

For example, the selection candidate generation unit 35 can calculate the carbon dioxide emission amount by the following method.
- Power consumption of the entire system is calculated, from the specification information of each supplier component configuring each system configuration candidate and a running plan (information on annual running time or the like) input by the user, and the calculated power consumption is multiplied by a carbon dioxide generation amount per unit power to calculate the carbon dioxide emission amount during running.
- The carbon dioxide emission amounts related to manufacturing, transportation, and disposal are calculated from data of the greenhouse gas emission amounts related to the manufacturing and disposal of each plant component.

In this manner, with the presentation of the carbon dioxide emission amount as one index in a case where the system configuration candidate is selected, the user can select the system configuration candidate in consideration of the carbon dioxide emission amount.

### [Selected Component Storage Unit 44]

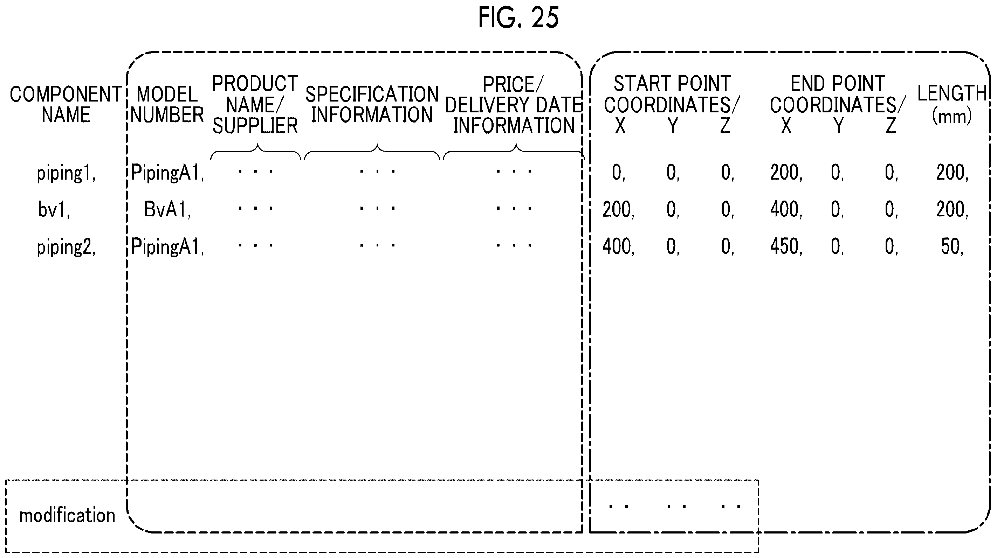

As described above, the selected component storage unit 44 stores, for each system configuration candidate, the information on the supplier component corresponding to each constituent element configuring the system. Further, the selected component storage unit 44 stores the coordinate information in correspondence with each supplier component. FIG. 25 is a diagram showing an example of data of the system configuration candidate stored in the selected component storage unit 44. As shown in FIG. 25, the selected component storage unit 44 is registered with the information on the supplier component and the coordinate information, which correspond to each plant component, in an associated manner. The information on the supplier component is acquired from, for example, the component candidate storage unit 43, and the coordinate information is acquired from the system configuration storage unit 42.

In the selected component storage unit 44, each supplier component may be stored, for example, in a list in a disposition order of the plant components from the transport start point to the transport end point in the system configuration diagram shown in FIG. 18.

### [System Configuration Generation Unit 36]

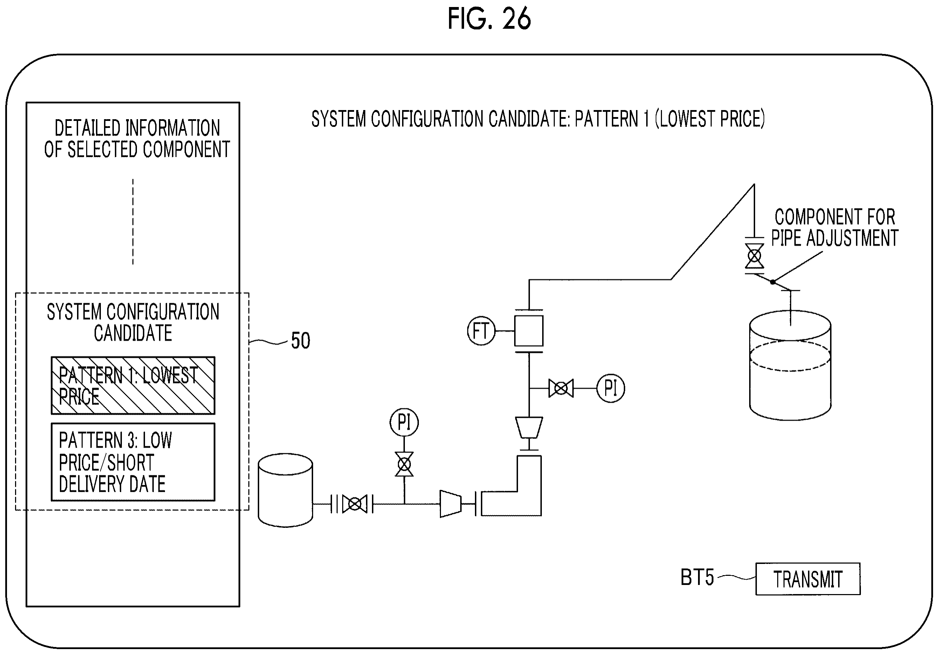

The system configuration generation unit 36 generates, for each system configuration candidate, the system configuration diagram connecting the transport start point to the transport end point, based on the information on the supplier components of each system configuration candidate stored in the selected component storage unit 44 and the coordinate information, generates a system configuration adjustment screen in which each generated system configuration diagram can be displayed, and transmits the generated screen data to the client terminal 70. FIG. 26 shows an example of the system configuration adjustment screen. As shown in FIG. 26, the system configuration adjustment screen displays detailed information of a selected component, together with the system configuration diagram generated by using the supplier component. The system configuration diagram shown in FIG. 26 includes a component for pipe adjustment (modification component). This indicates a pipe error due to the employment of the supplier component instead of the standard component. In a case where the user selects the plurality of system configuration candidates, the comparison selection screen (refer to FIG. 23) displays a display switching unit 50 that switches the system configuration diagram to be displayed on the client terminal 70. The user can switch the system configuration diagram to be displayed on a display screen by operating the display switching unit 50.

The standard system configuration diagram shown in FIG. 18 is created using the standard component, while the system configuration diagram shown in FIG. 26 is created using the supplier component. For this reason, there is a possibility that a position of the transport end point may be different from the coordinates of the transport end point requested by the user, due to an error between a typical specification of the standard component and the specification of the supplier component. The error is shown in the system configuration diagram as the component for pipe adjustment, and the user is caused to adjust the position of each element component (pump or the like) or the length of the pipe such that the component for pipe adjustment is not required. Accordingly, it is possible to eliminate the error in a case where the supplier component is used, and to satisfy the conditions of the transport start point and the transport end point input on a required input screen (refer to FIG. 9).

In a case where the adjustment is ended in each system configuration diagram, the user presses a transmission button BT5. Accordingly, information on the system configuration diagram after the adjustment, specifically, the coordinate information and the length of each constituent element after the adjustment are transmitted, for each system configuration candidate, to the purchase assistance device 1. In a case where the information after the adjustment is received, the system configuration generation unit 36 updates the coordinate information or the length of each element component stored in the selected component storage unit 44 based on the information.

### [Specification Check Unit 37]

The specification check unit 37 performs, for each system configuration candidate, performance calculation again, based on data of the system configuration diagram after the adjustment, that is, data after the adjustment stored in the selected component storage unit 44. For example, the specification check unit 37 acquires the calculation block corresponding to each supplier component stored in the selected component storage unit 44, from among the plurality of calculation blocks stored in the fluid calculation block database 23, and connects the acquired calculation blocks based on the disposition order to generate the calculation block chain. The specification check unit 37 provides the input condition (for example, pressure, temperature, and flow rate) to the created calculation block chain to calculate the outlet condition (for example, pressure, temperature, and flow rate) of the fluid transport system. The specification check unit 37 may have other calculation functions such as the fluid flow diagnosis function at the highest reaching point, the NPSH calculation function, the hammer diagnosis function, the noise calculation function, and the validity diagnosis result of the design pressure and temperature of each component.

In a case where the performance calculation of each system configuration candidate is ended, the specification check unit 37 generates, for each system configuration candidate, a final check screen in which a performance calculation result and the like are displayed and transmits the generated final check screen to the client terminal 70. Accordingly, the display unit of the client terminal 70 displays the final check screen.

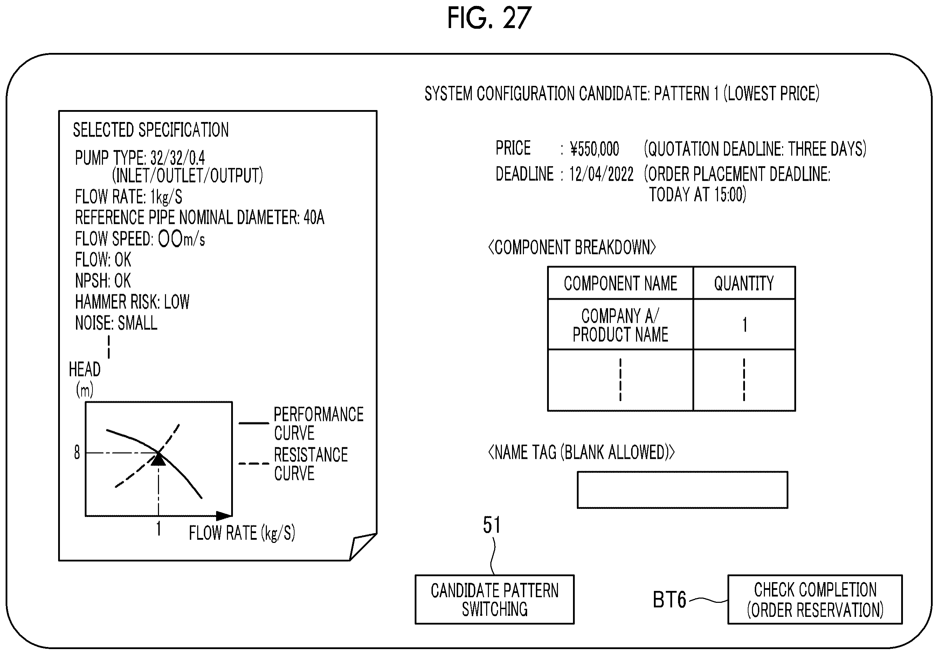

FIG. 27 is a diagram showing an example of the final check screen. As shown in FIG. 27, the final check screen is provided with a display switching unit 51 that switches the system configuration candidates to be displayed. The user can switch the system configuration candidate for displaying the performance calculation result and the like on the display screen by pressing the display switching unit 51. Instead of this aspect, for example, the performance calculation results for the plurality of system configuration candidates may be displayed in a comparable manner, as shown in FIG. 21. In a case where there is one system configuration candidate, the display switching unit 51 is omitted on the final check screen.

The final check screen displays the running point in a case where the fluid transport system is configured using the supplier component. Specifically, the final check screen displays the pump type, the flow rate, the reference pipe nominal diameter, and the flow speed value. The diagnosis results obtained by the respective calculation functions, for example, the diagnosis result of whether or not the minimum flow rate can be ensured at the highest reaching point, the calculation result of NPSH, the hammer risk, the noise level, the validity diagnosis result of the design pressure and temperature of each component, and the like may also be displayed. Further, the final check screen displays the price and the delivery date information together, and displays the detailed information (for example, supplier, model number, product name, price, and number of pieces) of the supplier component.

In a case where the user presses a check button BT6 on the final check screen of each system configuration candidate, an order reservation is confirmed, and order reservation information is transmitted to the purchase assistance device 1.

### [Order Placement Assistance Unit 38]

In a case where the order reservation information is received from the client terminal 70, the order placement assistance unit 38 assists in placing an order for each system configuration candidate for which a final check is performed.

First, the order placement assistance unit 38 stores, for each system configuration candidate for which the final check is performed by the user, the information on the supplier component in the order placement database 24 as the order placement reservation information. The order placement database 24 stores information related to the order placement for each user. Examples of the information related to the order placement include the order placement reservation information, the order placement history, and the order placement status. The order placement reservation information is registered with data of the supplier component stored in the selected component storage unit 44 (refer to FIG. 25).

Subsequently, the order placement assistance unit 38 generates an order reservation screen, based on the order placement reservation information of each system configuration candidate stored in the order placement database 24, and transmits the generated order reservation screen to the client terminal 70.

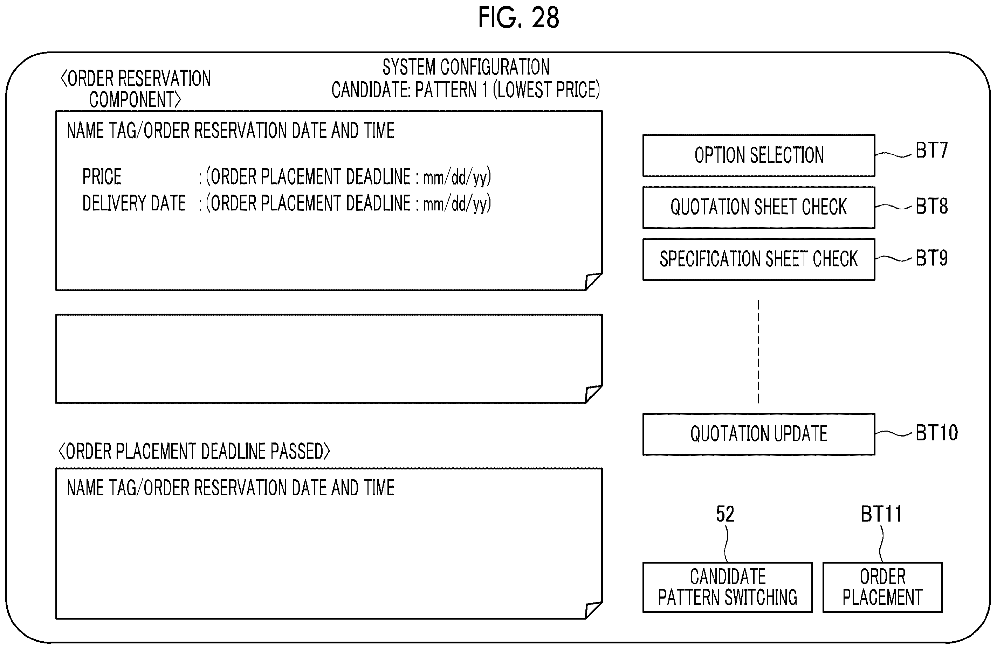

The order reservation screen displays, for each system configuration candidate, the price and delivery date of the fluid transport system and an order placement reservation date. The order reservation screen displays various functions for assisting in performing the system order placement by the user. FIG. 28 is a diagram showing an example of the order reservation screen. The order reservation screen shown in FIG. 28 displays option selection, a quotation sheet check, a specification sheet check, and quotation update, as examples of the functions for assisting in performing the system order placement. The order reservation screen is provided with a display switching unit 52 that switches the system configuration candidates to be displayed.

For example, the option selection is a function of presenting, to the user, the option information of the entire fluid transport system of the system configuration candidate or each supplier component configuring the fluid transport system to cause the user to select required option information. For example, in a case where the user presses an option selection button BT7 provided in the order reservation screen, the order placement assistance unit 38 causes the client terminal 70 to display an option selection screen for selecting the option information. Specifically, the order placement assistance unit 38 acquires, from the supplier component database 22, the option information related to each supplier component stored in the selected component storage unit 44, generates the option selection screen showing the acquired option information of each supplier component, and transmits the generated option selection screen to the client terminal 70. The option selection screen may include the option information of the entire system, in addition to the option information of the supplier component.

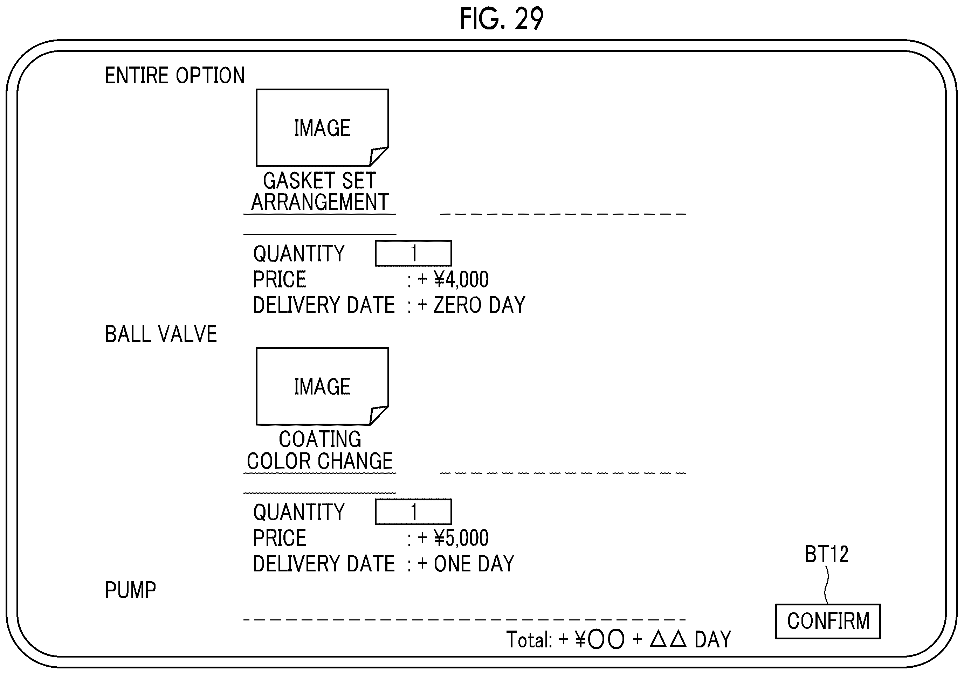

FIG. 29 is a diagram showing an example of the option selection screen. As shown in FIG. 29, the option selection screen shows the option information for the entire system and for each supplier component. An example of the option information includes information on option contents, the price, and the delivery date. The option selection screen shown in FIG. 29 shows gasket set arrangement, as the option information of the entire system. For example, in a case where the flange is fitted, a gasket needs to be inserted. The gasket can be decided, for example, from the fluid type, the design temperature, and the design pressure. On the option selection screen, in a case where the user selects one or a plurality of options and a confirmation button BT12 is pressed, information on the option selected by the user is transmitted to the purchase assistance device 1. Accordingly, the order placement reservation information of the system configuration candidate stores the option information (contents, price, delivery date, and the like) selected by the user.

An example of the option information includes a component sale related to a heat retention plan. For example, a heat retention type and a heat retention thickness may be displayed as the option information. The heat retention is planned together with the purchase of the fluid transport system, and thus it is possible to assist the user in reducing the man-hours.

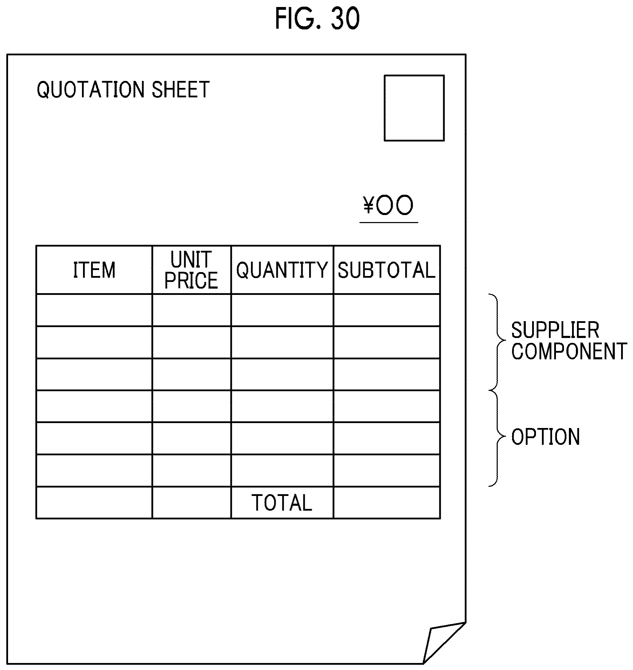

The quotation sheet check is a function of presenting, to the user, the quotation sheet for the supplier component related to the system configuration candidate. For example, in a case where the user presses a quotation sheet check button BT8 provided in the order reservation screen, the order placement assistance unit 38 acquires, from the order placement reservation information associated with the system configuration candidate, the price and delivery date information of each supplier component configuring the fluid transport system, and creates the quotation sheet based on the acquired pieces of information. In a case where the order placement reservation information is registered with the option information, the quotation sheet including the option information is created. A quotation sheet check screen for presenting the quotation sheet to the user is generated and displayed on the client terminal 70. FIG. 30 is a diagram showing an example of the quotation sheet check screen. The quotation sheet check screen may display the delivery date information and a validated date of the quotation sheet.

A configuration may be employed in which the supplier needs to be checked before the quotation sheet check screen is presented to the user. In this case, for example, the order placement assistance unit 38 transmits quotation information related to a quotation to the supplier of each supplier component configuring the system configuration candidate. Accordingly, the quotation information is displayed on the supplier terminal 80 of the supplier. Examples of the quotation information include the model number, the product name, the price, a quantity, the option information, and the delivery date.

The supplier checks the quotation information displayed on the supplier terminal 80, and in a case where correction is required, the supplier performs the correction and then performs an input operation for approval, for example, an input operation such as pressing an approval button. Accordingly, approved quotation information is transmitted to the purchase assistance device 1. In a case where the approved quotation information is acquired from the supplier terminal, the order placement assistance unit 38 of the purchase assistance device 1 generates a quotation sheet check screen based on the acquired quotation information, and transmits the generated quotation sheet check screen to the client terminal 70.

With the above method, unlike a method of automatically creating the quotation sheet from information registered in advance, the supplier can perform strategic quotation sheet submission with minimum effort, such as being able to set the price or the delivery date in accordance with the supplier's own latest inventory and production status.

Regarding the quotation sheet creation, instead of the creation of the quotation sheet from the order placement reservation information by the order placement assistance unit 38, a form may be employed in which the supplier of each supplier component configuring the system configuration candidate is requested to provide the quotation information.

For example, in a case where the user presses the quotation sheet check button BT8 provided in the order reservation screen, the order placement assistance unit 38 specifies the supplier of each supplier component configuring the system configuration candidate, and transmits a quotation sheet creation request to the supplier terminal 80 of the specified supplier. The quotation sheet creation request includes, for example, the model number, the product name, the quantity, and the option information. Each supplier that has received the quotation sheet creation request creates the quotation sheet based on the quotation sheet creation request, and transmits the created quotation sheet to the purchase assistance device 1. Accordingly, the quotation sheet created by the target supplier is transmitted to the purchase assistance device 1, for each supplier component configuring the system configuration candidate.

In a case where the quotation sheets for each supplier component configuring the system configuration candidate are received, the order placement assistance unit 38 generates the quotation sheet check screen capable of collectively displaying the quotation sheets, and transmits the generated quotation sheet check screen to the client terminal 70. Accordingly, the user can check the quotation sheets created by respective suppliers.

The specification sheet check is a function of presenting, to the user, the specification sheet of the supplier component for which the order placement is currently planned to be performed. For example, in a case where the user presses a specification sheet check button BT9 provided in the order reservation screen, the order placement assistance unit 38 acquires, from the order placement reservation information, the specification information of each supplier component configuring the fluid transport system, and creates the specification sheet based on the acquired pieces of information. A specification sheet check screen for presenting the specification sheet to the user is generated and displayed on the client terminal 70.

As with the quotation sheet described above, the specification sheet may be approved by each supplier before the specification sheet check screen is generated, or a specification sheet creation request may be transmitted to each supplier, and the specification sheet obtained in this manner may be displayed on the client terminal 70.

The quotation update is a function for the user to issue an instruction to update the quotation sheet based on current order placement reservation information, for an order reservation in which the validated date of the quotation sheet is about to pass or an order reservation in which the validated date of the quotation sheet has already passed. For example, in a case where the user presses a quotation update button BT10 provided in the order reservation screen, the order placement assistance unit 38 acquires, from the order placement reservation information, the price and delivery date information of each supplier component configuring the fluid transport system again, and updates the quotation sheet based on the acquired pieces of information. Information on the quotation sheet after the update is transmitted to the client terminal 70 to be presented to the user.

Regarding the quotation update, as in the above case, approval may be obtained from each supplier, or the quotation sheet creation request may be transmitted to each supplier, and the quotation sheet obtained in this manner may be displayed on the client terminal 70.

The user can switch the system configuration candidate to be displayed on the display screen by pressing the display switching unit 52, and can perform, for each system configuration candidate, the option selection, the quotation sheet check, the specification sheet check, the quotation sheet update, and the like by pressing the option selection button BT7, the quotation sheet check button BT8, the specification sheet check button BT9, and the quotation update button BT10 for each system configuration candidate.

In a case where a quoted amount of money, the delivery date, the specification, and the like in each system configuration candidate are compared and any one system configuration candidate is decided, the user presses an order placement button BT11 in a state where the decided system configuration candidate is displayed.

On the order reservation screen (refer to FIG. 28), in a case where the user presses the order placement button BT11, order placement instruction information is transmitted to the purchase assistance device 1 to issue an instruction to place an order for the decided system configuration candidate. In a case where the order placement instruction information is received, the order placement assistance unit 38 places an order for the supplier component with each supplier terminal 80 (refer to FIG. 1) based on the order placement reservation information of the decided system configuration candidate, and changes the order placement reservation information into order placement information. In a case where an inquiry or the like occurs between the user and the supplier even after the order placement is completed, the information may be exchanged via the purchase assistance device 1.

For example, the order placement assistance unit 38 may have a function of assisting in making various inquiries during a period from order placement to delivery, for example, an inquiry about a delivery location, a delivery date and time, or the like. Accordingly, it is possible to reduce a burden of each adjustment related to the delivery, which has been a burden for both the user and the supplier in the related art.

The supplier may be caused to attach an information identification tag or a barcode to a delivered component, and thus the purchase assistance device 1 may assist the user in managing the delivered component. For example, since the fluid transport system is configured of the plurality of supplier components, there is a possibility that the supplier components are sequentially delivered from different suppliers to the user. In this case, with provision of shared system identification information to the supplier components used in the same fluid transport system, the user can easily understand that a received supplier component belongs to which fluid transport system element component. The system identification information may be managed in the purchase assistance device 1.

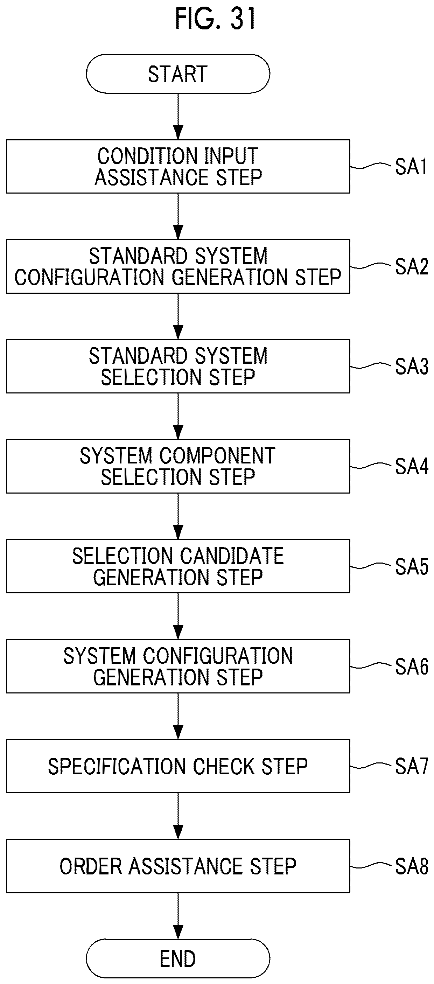

Next, the purchase assistance method according to the present embodiment will be briefly described with reference to FIG. 31. A series of pieces of processing described below is stored in the auxiliary storage device 12 included in the purchase assistance device 1 as a program (for example, purchase assistance program), and are realized by the CPU 11 reading out the program into the main memory 13 and executing the program.

FIG. 31 is a flowchart showing an example of a processing procedure of the purchase assistance method according to the present embodiment. Hereinafter, for convenience of description, the purchase assistance method in a case where the fluid transport system that transports water from a certain tank to a certain tank is desired to be purchased will be described.

First, the purchase assistance device 1 transmits and displays, on the client terminal 70, the dialog-type condition input screen as shown in FIGS. 6 to 17, and causes the user to input various types of information required for the purchase of the plant component of the fluid transport system (SA1: condition input assistance step). The information input in the condition input assistance step is stored in the selection condition storage unit 41 as the selection condition.

Subsequently, the purchase assistance device 1 generates the standard system configuration diagram of the fluid transport system based on the selection condition, and causes the user to adjust a standard system configuration (SA2: standard system configuration generation step). Specifically, the standard components configuring the fluid transport system are acquired from the standard component database 21 based on the selection condition stored in the selection condition storage unit 41, and the standard components are disposed in order on the pipe route connecting the transport start point to the transport end point to generate the standard system configuration diagram. The standard system configuration adjustment screen (refer to FIG. 18) including the standard system configuration diagram is displayed on the display unit of the client terminal 70, and the user is caused to adjust the standard system configuration diagram. The information based on the standard system configuration diagram confirmed by the user is stored in the system configuration storage unit 42 (refer to FIG. 19).

Subsequently, the purchase assistance device 1 generates the plurality of standard system configuration candidates, generates the standard system selection screen in which the plurality of standard system configuration candidates are shown in a comparable manner (refer to FIG. 21), and causes the user to select a desired standard system configuration candidate (SA3: standard system selection step). **In** this case, the purchase assistance device 1 may generate the calculation block chain for each standard system configuration candidate to calculate the outlet condition of the system, and display the outlet condition on the standard system selection screen. **In** a case where the user selects any one of the standard system configuration candidates, the purchase assistance device 1 updates the information on the system configuration storage unit 42 based on the information on the selected standard system configuration candidate.

Next, the purchase assistance device 1 selects, from the supplier component database 22, one or the plurality of supplier components corresponding to each standard component stored in the system configuration storage unit 42, and stores the information on the selected supplier component in the component candidate storage unit 43 in association with each standard component (SA4: system component selection step).

Subsequently, the purchase assistance device 1 generates the plurality of system configuration candidates according to the predetermined evaluation criterion from among the plurality of supplier components stored in the component candidate storage unit 43, generates the comparison selection screen in which the plurality of system configuration candidates are shown in a comparable manner (refer to FIG. 23), and causes the user to select one or a plurality of desired selection pattern candidates (SA5: selection candidate generation step). In a case where the user selects one or the plurality of system configuration candidates, the purchase assistance device 1 stores the information on the selected system configuration candidate in the selected component storage unit 44 together with the coordinate information.

Subsequently, the purchase assistance device 1 generates, for each system configuration candidate, the system configuration diagram connecting the transport start point and the transport end point based on the information on the supplier component and the coordinate information stored in the selected component storage unit 44, generates the system configuration adjustment screen including the generated system configuration diagram (refer to FIG. 26), and causes the user to adjust a system configuration (SA6: system configuration generation step). In the purchase assistance device 1, in a case where the user adjusts the system configuration for each system configuration candidate, the information on the selected component storage unit 44 is updated based on the system configuration after the adjustment.

Next, the purchase assistance device 1 performs, for each system configuration candidate, the performance calculation based on the system configuration diagram after the adjustment, generates the final check screen (refer to FIG. 27) including the performance calculation result and the like, and causes the user to check the final check screen (SA7: specification check step). In a case where the user confirms the order reservation, the purchase assistance device 1 stores, in the order placement database 24, each piece of the information on the supplier component of each system configuration candidate for which the final check is performed, as the order placement reservation information.

Subsequently, the purchase assistance device 1 generates the order reservation screen based on the order placement reservation information for each system configuration candidate stored in the order placement database 24, and provides the user with the information such as the option selection, the quotation sheet, and the specification sheet (SA8: order assistance step). Then, in a case where the order placement instruction for any one system configuration candidate is received from the user, the purchase assistance device 1 places an order for the supplier component with each supplier based on the order placement reservation information, and changes the order placement reservation information to the order placement information.

As described above, with the purchase assistance device 1, the purchase assistance method, and the purchase assistance program according to the present embodiment, the user can specify the plurality of standard components conforming to the selection condition by performing the simple operation of inputting the selection condition, and thus generate the standard system configuration diagram including the specified plurality of standard components. Then, one or the plurality of supplier components corresponding to each standard component configuring the standard system configuration diagram are selected, and at least one system configuration candidate, which is a combination of the supplier components configuring the fluid transport system, is generated based on the selected plurality of supplier components to be presented to the user as the selection candidate.

For example, in a case where the plant component is selected, a selection criterion and a calculation expression may be different for each supplier. Thus, in a case where the calculation of each supplier is attempted to be executed at once, a calculation amount is enormous, which may require a lot of time for specification consideration or the quotation. On the contrary, with the purchase assistance device 1 of the present embodiment, first, as a first stage, the standard system configuration diagram is generated using the standard components that match the selection condition, and as a next second stage, each supplier component corresponding to each standard component is specified. Accordingly, since the supplier components can be narrowed down, it is possible to minimize the calculation amount while taking the user's needs into consideration, and to shorten a processing time.

The user can easily and collectively select the plurality of plant components configuring the fluid transport system by selecting a desired system configuration candidate, from among the system configuration candidates presented as the selection candidate. Accordingly, it is possible to easily and efficiently arrange the plurality of plant components. Therefore, it is possible to effectively shorten the period from the condition input to the purchase.

According to the present embodiment, a configuration can be made in which the plurality of system configuration candidates are selected on the comparison selection screen (refer to FIG. 23). Accordingly, the user can select the plurality of the system configuration candidates, and compare and consider the quotation, delivery date, specification, and the like for the selected system configuration candidates. Accordingly, it is possible to broaden a range of user's component selection, as compared with a case where only one system configuration candidate can be selected on the comparison selection screen.

The purchase assistance device 1 does not need to have all the functions shown in FIG. 3, and some of the functions can be omitted. For example, the standard system configuration generation unit 32 and the standard system selection unit 33 may be omitted, and the system component selection unit 34 may select the supplier component conforming to the selection condition.

It is not necessary to execute all of the series of pieces of processing shown in FIG. 31, and some processing can be omitted. For example, the standard system configuration generation step (SA2) and the standard system configuration selection step (SA3) may be omitted, and the supplier component conforming to the selection condition may be selected in the system component selection step (SA4).

### [Second Embodiment]

Next, a purchase assistance device 1a, a purchase assistance method, and a purchase assistance program according to a second embodiment of the present disclosure will be described with reference to drawings. The purchase assistance device 1a according to the present embodiment has a configuration in which the system of the purchase assistance device 1 according to the first embodiment is simplified. Hereinafter, the same reference numerals will be assigned to the same configurations as those of the first embodiment, and a description thereof will be omitted, and different points will be mainly described.

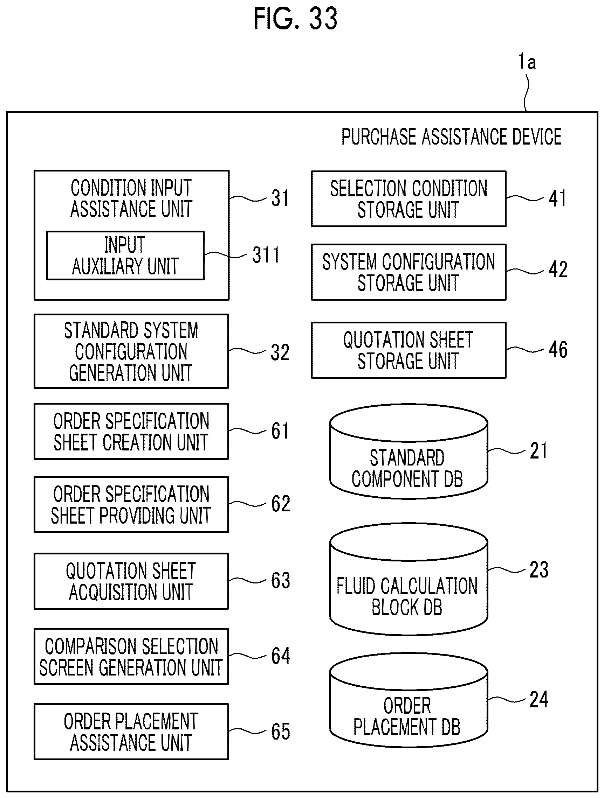

FIG. 33 is a functional configuration diagram showing an example of functions of the purchase assistance device 1a according to the present embodiment. As shown in FIG. 33, the purchase assistance device 1a may include the standard component database 21. The purchase assistance device 1a may include the fluid calculation block database 23 and the order placement database 24. The purchase assistance device 1 may include the condition input assistance unit 31, the standard system configuration generation unit 32, an order specification sheet creation unit 61, an order specification sheet providing unit 62, a quotation sheet acquisition unit 63, a comparison selection screen generation unit 64, and an order placement assistance unit 65. The purchase assistance device 1a may include the selection condition storage unit 41, the system configuration storage unit 42, and a quotation sheet storage unit 46, as storage areas for storing various types of data, in selecting the system component.

As in the first embodiment, the condition input assistance unit 31 acquires, as the selection conditions, the required function and the required specification related to the fluid transport system that the user desires to purchase.

The standard system configuration generation unit 32 specifies the plurality of standard components respectively corresponding to the plurality of element components configuring the fluid transport system based on the selection condition, from the standard component database 21 in which the information on the plurality of standard components related to the fluid transport system is stored.

As in the first embodiment described above, the standard system configuration generation unit 32 may generate the standard system configuration diagram in which the plurality of standard components specified for each element component are connected to each other, generate the standard system configuration adjustment screen (refer to FIG. 18) for causing to the user to adjust the position and the disposition order of the standard components configuring the standard system configuration diagram and to perform at least one of pipe addition, a change in transport path, and a change in pipe length, and transmit the generated standard system configuration adjustment screen to the client terminal 70. Accordingly, the user can draw a desired system configuration diagram by performing an operation such as moving the component block or changing the dimension of the pipe connecting the component blocks on the system configuration adjustment screen.

The system configuration storage unit 42 stores information based on the standard system configuration diagram confirmed by the user (refer to FIG. 19). Since data stored in the system configuration storage unit 42 is the same as that in the first embodiment described above, a detailed description thereof will be omitted here.

The order specification sheet creation unit 61 creates an order specification sheet, based on a standard fluid transport system configured of the plurality of standard components specified by the standard system configuration generation unit 32. In this case, the order specification sheet creation unit 61 may present, to the client terminal 70, the screen for designating a desired option, and may cause the user to select a required option.

The order specification sheet creation unit 61 creates the order specification sheet, for each element component configuring the standard fluid transport system, for example, for each of the valve, the pump, the flow meter, the pressure sensor, and a pipe/pipe fitting, based on the specification sheet of standard component corresponding to the element component. That is, the order specification sheet is created for each element component. In a case where the option is designated, the order specification sheet including the option information is created. The order specification sheet may include, for example, a required specification item in performance aspects, a required specification in aspects other than performance aspects, and a user's individual required specification.

In the present embodiment, as an example, the order specification sheet is configured to include a cover, a general item, the required specification in aspects other than performance aspects, the required specification in performance aspects, and the user's individual required specification.

The general item includes, for example, selection, applicable range, precautions at a time of quotation, precautions at a time of design, and the like. Contents of the general items differ depending on a type of plant equipment/component, but the same contents are provided for the same type. For example, a specification sheet general item database (not shown) in which description contents of the general item are stored for each type of plant equipment/components may be prepared in advance, and the order specification sheet creation unit 61 may read out, from the specification sheet general item database, the description contents corresponding to the type of plant equipment/component serving as a target to be issued in the specification sheet, and automatically create the description of the general item.

Examples of the required specification in aspects other than performance aspects include requirements for coating, a nameplate, inspection, and a drawing. The required specification in aspects other than performance aspects may be decided by a mechanism in which the user selects each item shown in Table 1 below in a dialogue form or a list form.

**[Table 1]**

| Major item Typical item | |
|---|---|
| Prerequisite condition | Applicable laws and regulations, standard |
| | Used language, used unit |
| | Conditions of delivery |
| | Delivery location |
| | Operation mode |
| | Specific condition in operation |
| | Desired delivery date |
| Required specification in aspects other than performance aspects | Coating specification |
| | Submitted drawing |
| | Inspection type |
| | Packaging |
| | Quality requirements (including warranty period) |
| | Nameplate |
| Additional required specification in performance aspects (specification that cannot be fully expressed in specification consideration application) | Special design condition (explosion-proof, noise, etc.) |
| Option | Spare component |
| | Special tool |
| | TA dispatch |

For example, a database in which a selection result is associated with the description contents is prepared in advance for each item. At a time of creating the order specification sheet, the description contents corresponding to the selection result selected by the user for each item may be read out from the database, and the description contents of the item may be automatically created. A configuration may be employed in which a history (actual record) of entry contents for each item is stored for each user, and the user selects the entry contents from history information to simplify the entry for a second and subsequent times. The candidate may be presented to the user in a state of being automatically input from information such as a work place registered by the user.

The required specification in performance aspects is mainly automatically created based on the data stored in the system configuration storage unit 42. For example, in a case of the pipe or the valve, the order specification sheet creation unit 61 acquires, from the system configuration storage unit 42, the information such as the standard component name, the pipe nominal diameter, the nominal pressure (temperature/pressure rating), the start point coordinates, the end point coordinates, and the length corresponding to the target component (refer to FIG. 19), and creates the required specification sheet based on the acquired information.

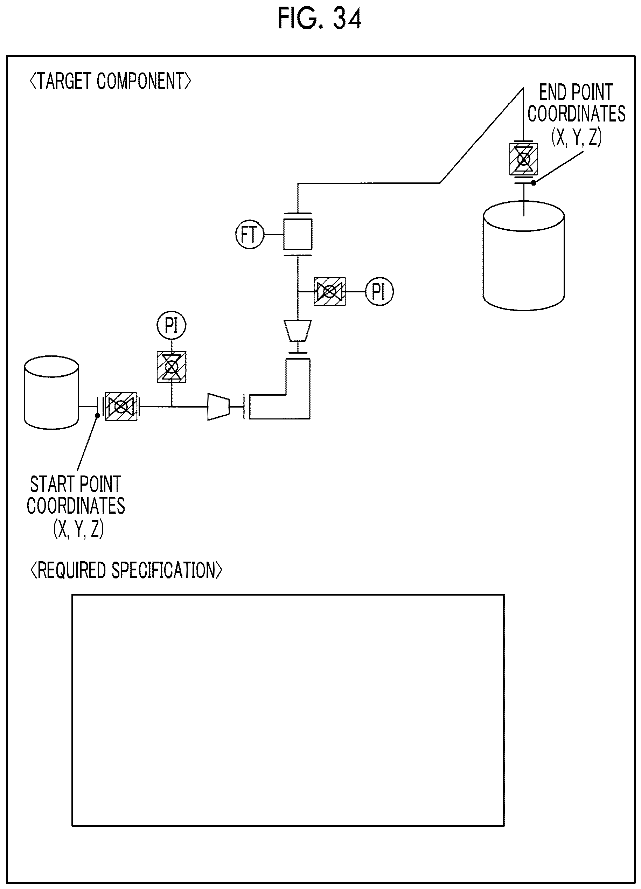

FIG. 34 is a diagram showing an example of the required specification in performance aspects in a case where the target component is the valve. For example, in the required specification sheet in performance aspects, the target component is displayed in a different aspect (for example, netting or different color) from other components such that the target component can be distinguished, in the system configuration diagram of the fluid transport system, and the required specification of the target component is described. The required specification may be described as a table or may be described as a list.

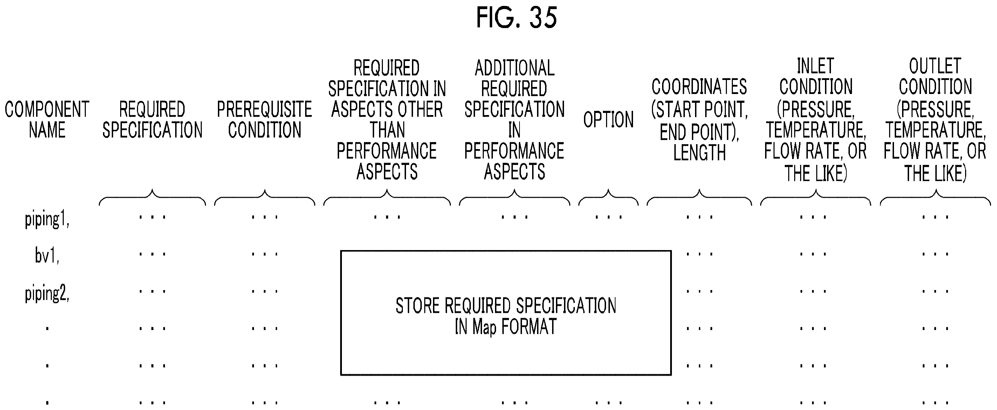

The purchase assistance device 1a has a required specification storage unit (not shown) that stores required specification data (including both functional aspects and aspects other than functional aspects) described in the required specification sheet, and the order specification sheet creation unit 61 may store the required specification data of the created required specification sheet in the required specification storage unit. FIG. 35 shows an example of the required specification data. As shown in FIG. 35, the required specification data is registered, for each plant component, with a component name, a required specification (required specification related to performance aspects), a prerequisite condition, a required specification in aspects other than performance aspects, an additional required specification in performance aspects, an option, coordinates (start point/end point), a length, an inlet condition (pressure, temperature, flow rate, or the like), and an outlet condition (pressure, temperature, flow rate, or the like). Among the above, the information acquired from the system configuration storage unit 42 described above is registered for the component name, the required specification (required specification related to performance aspects), the prerequisite condition, the coordinates (start point/end point), the length, the inlet condition (pressure, temperature, flow rate, or the like), and the outlet condition (pressure, temperature, flow rate, or the like). The prerequisite condition, the additional required specification, and the option may be the information input in a dialogue form, as in the required specification in aspects other than performance aspects described above.

The order specification sheet providing unit 62 provides the order specification sheet corresponding to each element component, which is created by the order specification sheet creation unit 61, to the plurality of supplier terminals 80 that enable the supply of the element component in a viewable manner, and makes the quotation request. For example, the order specification sheet providing unit 62 generates a quotation request screen including the order specification sheet and showing information necessary for creating the quotation sheet, and transmits information of the quotation request screen (for example, access information for quotation request screen) to the plurality of supplier terminals 80 registered in advance in a form of public offering. Examples of the information necessary for creating the quotation sheet include information on the purchase target (for example, pump, pipe, or valve), an application period, and a desired delivery date.

A configuration may be employed in which the user can designate the supplier to which the quotation request is made. **In** this case, the order specification sheet providing unit 62 makes the quotation request only to the supplier terminal 80 of the supplier designated by the user.

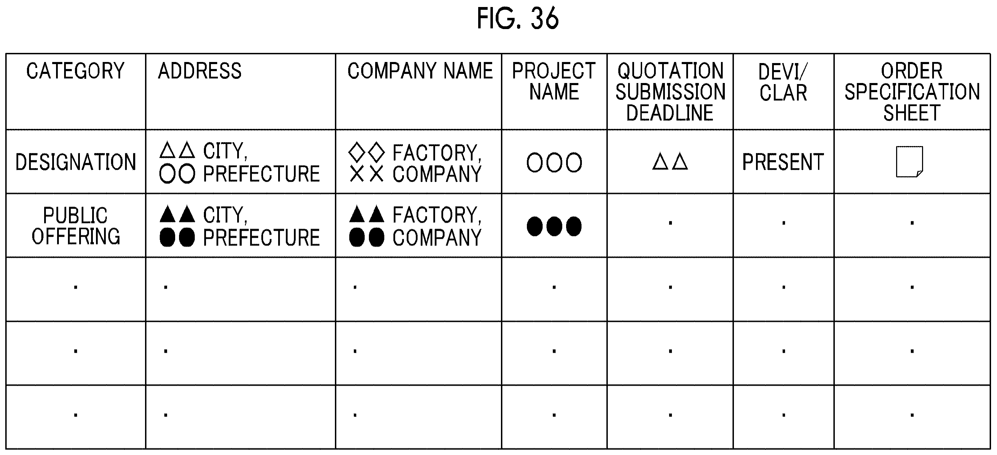

FIG. 36 shows an example of the quotation request screen displayed on the supplier terminal 80. The supplier terminal 80 displays, for example, the quotation request currently received by the supplier in a list. As shown in FIG. 36, the quotation request screen displays a name of company to which the request is made, a project name, a quotation submission deadline, and the like. The quotation request screen may display whether or not an exchange of Deviation and Clarification (hereinafter, referred to as "Devi/Clar") is possible, delivery destination information, and the like. Here, Deviation is an item that the supplier offers to the purchaser in a case where there is an item in the order specification sheet that the supplier cannot meet. For example, in a case where the steam trap having a maximum use temperature of 350°C is required, but the supplier can provide only the steam trap having the maximum use temperature of up to 320°C, the supplier states in Deviation that the supplier can meet the maximum use temperature of only up to 320°C. Clarification is an item that the supplier offers to the purchaser in a case where there is a check item regarding the description contents in the order specification sheet. For example, a mistake in writing units is pointed out, and it is checked with Clarification whether or not the recognition is correct. The quotation request screen may display information for displaying the order specification sheet.

The supplier checks the quotation request screen displayed on the supplier terminal 80, and selects a project for which the supplier wants to make a quotation response. Accordingly, an input screen for attaching the quotation sheet is displayed. In a case where the supplier attaches the quotation sheet and a transmission operation is performed, the quotation sheet is transmitted to the purchase assistance device 1a in association with project information.

In a case where the quotation sheet in association with the project information is received from the supplier terminal 80, the quotation sheet acquisition unit 63 stores the received quotation sheet in the quotation sheet storage unit 46. Accordingly, the quotation sheet storage unit 46 stores the received quotation sheet in association with the project information.

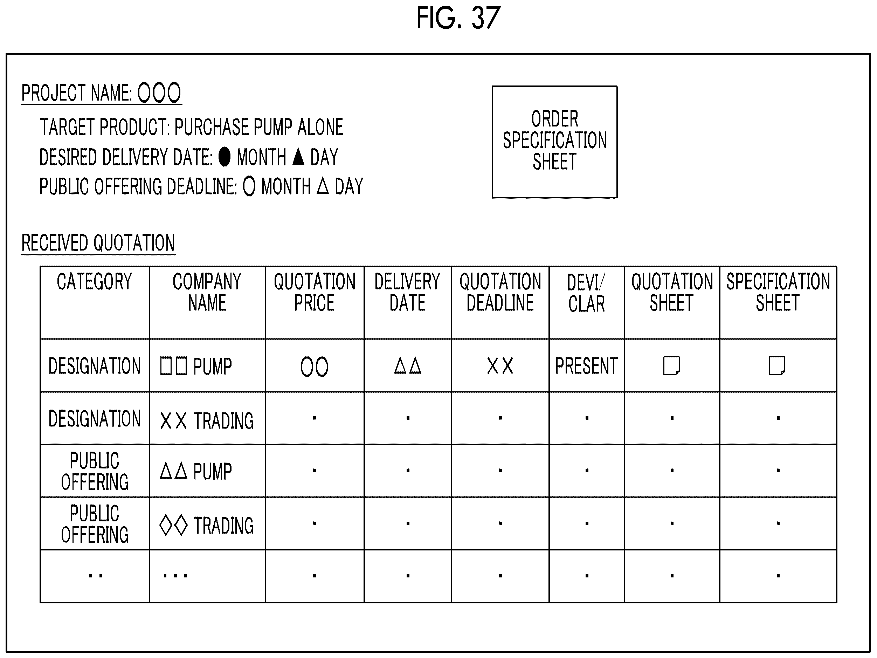

The comparison selection screen generation unit 64 generates, in a viewable manner from the client terminal 70, the comparison selection screen in which the delivery dates and prices of one or the plurality of supplier components for each element component are shown in a comparable manner, based on the plurality of quotation sheets related to the project information. For example, in a case where a public offering period ends, the comparison selection screen generation unit 64 acquires the quotation sheet for each element component from the quotation sheet storage unit 46, and generates the comparison selection screen based on the acquired quotation sheet. FIG. 37 is a diagram showing an example of the comparison selection screen in a case where the element component is the pump. As shown in FIG. 37, the comparison selection screen displays, for example, the company name, the quotation price, and the delivery date of the supplier in a comparable manner. The comparison selection screen may include whether or not the supplier is designated by the user (designation or public offering), a quotation deadline, whether or not the exchange of Devi/Clar is possible, and the like. The comparison selection screen may include the quotation sheet, the specification sheet, and the order specification sheet in a viewable manner.

**In** a case where the user selects the supplier component for which the order placement is desired to be performed to perform an order placement operation in the comparison selection screen generation unit 64, the order placement assistance unit 65 places an order with the supplier of the supplier component. The order placement information may be stored and managed in the order placement database 24, for example.

As described above, with the purchase assistance device 1a, the purchase assistance method, and the purchase assistance program according to the present embodiment, the user can specify the plurality of standard components conforming to the selection condition by performing the simple operation of inputting the selection condition, and thus create the order specification sheet based on the specified plurality of standard components. **In** this manner, since the order specification sheet of each element component configuring the fluid transport system is automatically created, it is possible to achieve a reduction in the burden on the user and a reduction in a work time. Even a user with little experience can easily obtain the order specification sheet.

With the purchase assistance device 1a according to the present embodiment, the order specification sheet is transmitted to the plurality of suppliers and the quotation request is made. Accordingly, it is possible to compare the prices and delivery dates of the plurality of suppliers, and thus to easily select the supplier component with the best condition. It is possible to easily select the supplier component that satisfies the requirements in both price and delivery date. It is possible to place an order for each supplier component configuring the fluid transport system with a very simple input operation of selecting a desired supplier component from the comparison selection screen. Accordingly, it is possible to easily and efficiently arrange the plurality of plant components. Therefore, it is possible to effectively shorten the period from the condition input to the purchase.

With the purchase assistance device 1a according to the present embodiment, the required specification of the order specification sheet is handled as digital data. Accordingly, the supplier can automatically create submission documents such as the quotation sheet, the specification sheet, and an outline drawing by reusing the order specification sheet of the digital data. Accordingly, it is possible to significantly reduce the burden on the supplier, as compared with a case where a paper-based order specification sheet is received.

With the purchase assistance device 1a according to the present embodiment, it is possible to automatically create the general item and the required specification in the order specification sheet, and thus the user can input the required specification in aspects other than performance aspects and the like, which are difficult to be automatically created, in a dialogue form. Accordingly, it is possible to significantly reduce the burden on the user related to the creation of the order specification sheet. In the related art, there has been a case where an order specification sheet is created using a spreadsheet application or the like. However, in creating the required specification in aspects other than performance aspects, there are many contents that cannot be incorporated into a format of the spreadsheet application, and thus workability and convenience are low. On the contrary, in the present embodiment, since the function of assisting the creation of the order specification sheet is excellent, it is possible to reduce the burden and effort of a user who creates the order specification sheet.

With the purchase assistance device 1a of the present embodiment, various types of information such as the selection conditions, such as the fluid type, the operation mode, the required function, and the required specification sheet, and the running conditions (for example, inlet condition and outlet condition) are provided to the supplier as the order specification sheet. Accordingly, it is possible to issue a notification of the detailed information (for example, operation condition) that has not been provided from the user to the supplier in the related art. Accordingly, the supplier can select a product that matches the user's request by comprehensively considering these pieces of information. In the related art, since the fluid type, the running conditions, and the like are not provided to the supplier, there is a case where the supplier makes a guess from a past record or the like to provide the product. However, such a problem is improved.

### [Modification Example 1]

In the present embodiment, the case has been described in which the order specification sheet is created for each element component (for example, valve, pump, flow meter, pressure sensor, or pipe/pipe fitting) as an example, but the present disclosure is not limited thereto. For example, a single order specification sheet may be created for the entire fluid transport system for a supplier that handles many different types of components.

### [Modification Example 2]

In the present embodiment, the configuration is employed in which the purchase assistance device 1, the client terminal 70, and the supplier terminal 80 are connected via the network, and the order specification sheet is transmitted to the supplier terminal 80 via the network, but the present disclosure is not limited thereto. For example, an aspect may be employed in which the user may operate the client terminal 70 to output the order specification sheet and directly place an order with the supplier in the same manner as in the related art.

### [Modification Example 3]

In the present embodiment, a mechanism may be provided in which the user who has purchased a product through the purchase assistance device 1a can disclose or provide feedback to the supplier regarding an actual feeling of use, defect information (trouble information, damage information at time of maintenance, or the like), a comment, or the like. Accordingly, more pieces of information about the supplier and the product is provided to the user and the supplier, and thus it is possible to improve information for product selection by the user or the quality of the product to be handled. As a result, the quality of the purchase assistance device 1a itself is also improved, which contributes to the development of users or suppliers.

### [Modification Example 4]

In the present embodiment, in a case where there is a user-specific individual required specification sheet, data of the individual required specification sheet may be uploaded to the purchase assistance device 1a to be added to the order specification sheet and to be provided to the supplier. In this case, an amount of money may be automatically calculated according to the number of characters, the number of pages, or the like of the uploaded individual required specification sheet, and the amount of money may be presented as an additional quotation amount of money or charged to the user. For example, a notification such as "attaching this individual required specification sheet will incur additional cost of ∘∘ yen" may be issued. Accordingly, it is possible to reduce the user's motivation to make an individual request that is more than sufficient.

For example, in a case where there is the individual request from the user, the supplier side needs to respond to the individual request. For this reason, the burden on the supplier is larger as the number of items in an individual required specification is larger. However, for the individual required specification, it may be difficult for the supplier to charge the user for the man-hours due to a relationship between the user and the supplier. There is a case where some suppliers anticipate the individual request and add the individual request to a product charge. In this case, the user also pays a high amount of money, which is a problem that needs to be solved between both the user and the supplier.

In order to solve such a problem, as described above, in a case where there is the individual required specification sheet, a configuration is employed in which the user is notified of an additional charge according to an amount or contents of the individual required specification sheet. Accordingly, it is expected to reduce a frequency of making the individual request that is more than sufficient.

### [Modification Example 5]

In the present embodiment, the user selects and places an order for a desired component from the supplier components displayed on the comparison selection screen, but the present disclosure is not limited to this example. For example, there is also a case where the user is confused about which supplier component is required to be selected, on the comparison selection screen. In consideration of the above case, a configuration may be employed in which the plurality of supplier components can be selected as purchase candidates on the comparison selection screen.

For example, the purchase assistance device according to the present modification example may include a system configuration generation unit (not shown) that, in a case where one or the plurality of supplier components are selected as the purchase candidates on the comparison selection screen for each element component by the user, generates the plurality of system configuration candidates using the supplier components selected as the purchase candidates. For example, a case is assumed in which two supplier components are selected as the purchase candidates on the comparison selection screen of the pump shown in FIG. 37 and one supplier component is selected for each of the constituent elements other than the pump. In this case, the system configuration generation unit generates two system configuration candidates including the system configuration candidate that employs one pump and the system configuration candidate that employs the other pump.

For the two system configuration candidates, as in the first embodiment described above, the system configuration diagram is generated, and the system configuration adjustment screen for the user to adjust at least one of a change in pipe route, a change in pipe length, and a change in pipe disposition angle in the system configuration diagram is generated (refer to FIG. 26). Subsequent processing may be performed in the same manner as the processing in the first embodiment described above. The option selection has already been performed by the user, and the quotation sheet and the specification sheet may be created using the information stored in the quotation sheet storage unit 46 since the information acquired from each supplier has already been stored in the quotation sheet storage unit 46.

The present disclosure has been described above with reference to respective embodiments, but the technical scope of the present disclosure is not limited to the above embodiments. Various modifications or improvements can be added to the above embodiments within the scope not departing from the concept of the disclosure, and forms to which the modifications or the improvements are added are also included in the technical scope of the present disclosure.

The flow of the processing described in the above embodiment is also an example, and unnecessary steps may be deleted, new steps may be added, or the procedure may be changed without departing from the gist of the present disclosure.

The purchase assistance device 1, the purchase assistance method, and the purchase assistance program described in the above embodiment are understood as follows, for example.

According to a first aspect of the present disclosure, there is provided a purchase assistance device (1a) that assists in purchasing a fluid transport system including a plurality of plant components, the purchase assistance device including a condition input assistance unit (31) that acquires, as selection conditions, a required function and a required specification related to a fluid transport system that a user desires to purchase, a standard system configuration generation unit (32) that specifies, from a standard component database (21) in which information on a plurality of standard components related to the fluid transport system is stored, a plurality of standard components each corresponding to a plurality of element components configuring the fluid transport system based on the selection conditions, and an order specification sheet creation unit (61) that creates an order specification sheet based on a standard fluid transport system configured of the specified plurality of standard components.

According to the above aspect, the user can easily specify the standard component of the fluid transport system that matches the selection condition by performing the simple operation of inputting the selection condition. Accordingly, it is possible to collectively present the plurality of plant components configuring the fluid transport system to the user. Further, according to the present aspect, the order specification sheet is automatically created for each element component, based on the specification sheets of the specified plurality of standard components. Accordingly, it is possible to achieve the reduction in the burden on the user and the reduction in the work time. Even a user with little experience can easily obtain the order specification sheet.

According to a second aspect of the present disclosure, there is provided the purchase assistance device according to the first aspect further including an order specification sheet providing unit (62) that provides the order specification sheet to a plurality of suppliers in a viewable manner.

According to the above aspect, the order specification sheet is provided to the plurality of suppliers in a viewable manner, and the quotation request is made. Accordingly, it is possible to easily obtain the quotation sheet from the plurality of suppliers.

According to a third aspect of the present disclosure, there is provided the purchase assistance device according to the second aspect further including a quotation sheet acquisition unit (63) that acquires quotation sheets created by the plurality of suppliers based on the order specification sheet, and a comparison selection screen generation unit (64) that generates, in a viewable manner from a client terminal, a comparison selection screen in which delivery dates and prices of one or a plurality of supplier components for each of the element components are shown in a comparable manner, based on a plurality of the quotation sheets.

According to the above aspect, it is possible to compare the prices and delivery dates of the plurality of supplier components, and thus to easily select the supplier component with the best condition.

According to a fourth aspect of the present disclosure, there is provided the purchase assistance device according to the third aspect further including an order placement assistance unit (65) that places an order for the supplier component in a case where an order placement instruction for the supplier component is input in the comparison selection screen.

According to the above aspect, it is possible to place an order for each of the supplier components configuring the fluid transport system with a very simple input operation of selecting a desired supplier component from the comparison selection screen. Accordingly, it is possible to easily and efficiently arrange the plurality of plant components. Therefore, it is possible to effectively shorten the period from the condition input to the purchase.

According to a fifth aspect of the present disclosure, there is provided the purchase assistance device according to the third or fourth aspect further including a system configuration generation unit that generates, in a case where each of the supplier components is selected for each of the element components in the comparison selection screen, a system configuration diagram in which the selected plurality of supplier components are connected to each other, and generates a system configuration adjustment screen for the user to adjust at least one of a change in a pipe route, a change in a pipe length, and a change in a pipe disposition angle in the system configuration diagram.

According to the above aspect, with the adjustment of the pipe and the like of the system configuration diagram presented on the system configuration adjustment screen, it is possible to obtain the system configuration candidate configured of the plurality of supplier components that match the selection condition.

According to a sixth aspect of the present disclosure, there is provided the purchase assistance device according to the fifth aspect, in which the plurality of supplier components are selectable for each of the element components in the comparison selection screen, and the system configuration generation unit generates, in a case where the plurality of supplier components are selected for each of the element components, the system configuration adjustment screen for each case where each of the supplier components is employed.

According to the above aspect, even in a case where the user is confused about the selection of the supplier component for each element component, with the selection of the plurality of the supplier components, it is possible to obtain the system configuration adjustment screen in a case where each of the supplier components is employed. Accordingly, it is possible to make a final decision on the supplier component to be purchased, based on more pieces of information.

According to a seventh aspect of the present disclosure, there is provided the purchase assistance device according to any one of the first to sixth aspects, in which a configuration is made to enable the user to select a supplier from whom the user desires to receive a quotation sheet based on the order specification sheet.

According to the above aspect, the user can obtain the quotation sheet from a desired supplier.

According to an eighth aspect of the present disclosure, there is provided the purchase assistance device according to any one of the first to seventh aspects, in which the standard system configuration generation unit generates a standard system configuration diagram in which the plurality of standard components specified for each of the element components are connected to each other, generates a standard system configuration adjustment screen for causing the user to adjust a position and a disposition order of the standard components configuring the standard system configuration diagram and to perform at least one of addition of a pipe, a change in a transport path, and a change in a pipe length, and transmits the generated standard system configuration adjustment screen to a client terminal.

According to the above aspect, the user can easily adjust the position and the disposition order of the standard components in the standard system configuration diagram, which is displayed on the standard system configuration adjustment screen, and perform at least one of the addition of the pipe, the change in the transport path, and the change in the pipe length. Accordingly, the user can create a desired standard system configuration through a simple operation.

According to a ninth aspect of the present disclosure, there is provided a purchase assistance device (1) that assists in purchasing a fluid transport system including a plurality of plant components, the purchase assistance device including a condition input assistance unit (31) that acquires, as selection conditions, a required function and a required specification related to a fluid transport system that a user desires to purchase, a standard system configuration generation unit (32) that specifies, from a standard component database (21) in which information on a plurality of standard components related to the fluid transport system is stored, a plurality of standard components each corresponding to a plurality of element components configuring the fluid transport system based on the selection conditions, a system component selection unit (34) that selects, based on specifications of the plurality of standard components, one or a plurality of supplier components each corresponding to the element components from a supplier component database (22) in which information on supplier components sold by a supplier is stored, and a selection candidate generation unit (35) that generates a plurality of system configuration candidates, which are combinations of supplier components configuring the fluid transport system, based on the selected plurality of supplier components, generates a comparison selection screen in which the plurality of system configuration candidates are shown in a comparable manner, and provides the generated comparison selection screen to a client terminal (70).

According to the above aspect, the user can specify the plurality of standard components conforming to the selection condition by performing the simple operation of inputting the selection condition, and thus generate the standard system configuration diagram including the specified plurality of standard components. One or the plurality of supplier components corresponding to each of the standard components configuring the standard system configuration diagram are selected, and the plurality of system configuration candidates, which are the combinations of the supplier components configuring the fluid transport system, are generated based on the selected plurality of supplier components and presented to the user as the selection candidates. Accordingly, the user can easily and collectively select the plurality of plant components configuring the fluid transport system by selecting a desired system configuration candidate from among the system configuration candidates presented as the selection candidates. As a result, it is possible to easily and efficiently arrange the plurality of plant components. Therefore, it is possible to effectively shorten the period from the condition input to the purchase.

According to a tenth aspect of the present disclosure, there is provided the purchase assistance device according to the ninth aspect further including a system configuration generation unit (36) that generates, in a case where one or the plurality of system configuration candidates are selected in the comparison selection screen, a system configuration diagram in which the plurality of supplier components configuring the system configuration candidate are connected to each other for each of the selected system configuration candidates, and generates a system configuration adjustment screen for the user to adjust at least one of a change in a pipe route, a change in a pipe length, and a change in a pipe disposition angle in the system configuration diagram.

According to the above aspect, with the adjustment of the pipe and the like of the system configuration diagram presented on the system configuration adjustment screen, it is possible to obtain the system configuration candidate configured of the plurality of supplier components that match the selection condition.

According to an eleventh aspect of the present disclosure, there is provided the purchase assistance device according to the ninth or tenth aspect further including an order placement assistance unit (38) that makes a quotation request to a target supplier, based on one or the plurality of system configuration candidates selected from among the plurality of system configuration candidates, creates a quotation sheet in which information, a price, and a delivery date of a supplier component are shown for each of the system configuration candidates, based on a quotation sheet created by the target supplier, and provides the created quotation sheet to the client terminal.

According to the above aspect, it is possible to acquire, for each system configuration candidate, the quotation sheet for each supplier component configuring each system configuration candidate from the supplier. Accordingly, the user can compare the quoted amount of money and the delivery date presented by the supplier for the system configuration candidate, and thus can decide the system configuration candidate that best matches the conditions.

According to a twelfth aspect of the present disclosure, there is provided the purchase assistance device according to any one of the ninth to eleventh aspects, in which the standard system configuration generation unit generates a standard system configuration diagram in which the plurality of standard components specified for each of the element components are connected to each other, generates a standard system configuration adjustment screen for causing the user to adjust a position and a disposition order of the standard components configuring the standard system configuration diagram and to perform at least one of addition of a pipe, a change in a transport path, and a change in a pipe length, and transmits the generated standard system configuration adjustment screen to the client terminal.

According to the above aspect, the user can easily adjust the position and the disposition order of the standard components in the standard system configuration diagram, which is displayed on the standard system configuration adjustment screen, and perform at least one of the addition of the pipe, the change in the transport path, and the change in the pipe length. Accordingly, the user can create a desired standard system configuration through a simple operation.

According to a thirteenth aspect of the present disclosure, there is provided a purchase assistance method of assisting in purchasing a fluid transport system including a plurality of plant components, the purchase assistance method executed by a computer including a condition input assistance step of acquiring, as selection conditions, a required function and a required specification related to a fluid transport system that a user desires to purchase, a standard system configuration generation step of specifying, from a standard component database in which information on a plurality of standard components related to the fluid transport system is stored, a plurality of standard components each corresponding to a plurality of element components configuring the fluid transport system based on the selection conditions, and an order specification sheet creation step of creating an order specification sheet based on a standard fluid transport system configured of the specified plurality of standard components.

According to a fourteenth aspect of the present disclosure, there is provided a purchase assistance method of assisting in purchasing a fluid transport system including a plurality of plant components, the purchase assistance method executed by a computer including a condition input assistance step of acquiring, as selection conditions, a required function and a required specification related to a fluid transport system that a user desires to purchase, a standard system configuration generation step of specifying, from a standard component database in which information on a plurality of standard components related to the fluid transport system is stored, a plurality of standard components each corresponding to a plurality of element components configuring the fluid transport system based on the selection conditions, a system component selection step of selecting, based on specifications of the plurality of standard components, one or a plurality of supplier components each corresponding to the element components from a supplier component database (22) in which information on supplier components sold by a supplier is stored, and a selection candidate generation step of generating a plurality of system configuration candidates, which are combinations of supplier components configuring the fluid transport system, based on the selected plurality of supplier components, generating a comparison selection screen in which the plurality of system configuration candidates are shown in a comparable manner, and providing the generated comparison selection screen to a client terminal (70).

According to a fifteenth aspect of the present disclosure, there is provided a purchase assistance program for causing a computer to function as the purchase assistance device according to any one of the first to twelfth aspects. Reference Signs List

1: purchase assistance device
1a: purchase assistance device
11: CPU
12: auxiliary storage device
13: main memory
14: communication device
15: input unit
16: display unit
18: bus
21: standard component database
22: supplier component database
23: fluid calculation block database
24: order placement database
31: condition input assistance unit
32: standard system configuration generation unit
33: standard system selection unit
34: system component selection unit
35: selection candidate generation unit
36: system configuration generation unit
37: specification check unit
38: order placement assistance unit
41: selection condition storage unit
42: system configuration storage unit
43: component candidate storage unit
44: selected component storage unit
46: quotation sheet storage unit
50: display switching unit
51: display switching unit
52: display switching unit
61: order specification sheet creation unit
62: order specification sheet providing unit
63: quotation sheet acquisition unit
64: comparison selection screen generation unit
65: order placement assistance unit
70: client terminal
80: supplier terminal
311: input auxiliary unit

## Claims

1. A purchase assistance device that assists in purchasing a fluid transport system including a plurality of plant components, the purchase assistance device comprising:
a condition input assistance unit that acquires, as selection conditions, a required function and a required specification related to a fluid transport system that a user desires to purchase;
a standard system configuration generation unit that specifies, from a standard component database in which information on a plurality of standard components related to the fluid transport system is stored, a plurality of standard components each corresponding to a plurality of element components configuring the fluid transport system based on the selection conditions; and
an order specification sheet creation unit that creates an order specification sheet based on a standard fluid transport system configured of the specified plurality of standard components.

2. The purchase assistance device according to Claim 1, further comprising:
an order specification sheet providing unit that provides the order specification sheet to a plurality of suppliers in a viewable manner and that makes a quotation request.

3. The purchase assistance device according to Claim 2, further comprising:
a quotation sheet acquisition unit that acquires quotation sheets created by the plurality of suppliers based on the order specification sheet; and
a comparison selection screen generation unit that generates, in a viewable manner from a client terminal, a comparison selection screen in which delivery dates and prices of one or a plurality of supplier components for each of the element components are shown in a comparable manner, based on a plurality of the quotation sheets.

4. The purchase assistance device according to Claim 3, further comprising:
an order placement assistance unit that places an order for the supplier component in a case where an order placement instruction for the supplier component is input in the comparison selection screen.

5. The purchase assistance device according to Claim 3, further comprising:
a system configuration generation unit that generates, in a case where each of the supplier components is selected for each of the element components in the comparison selection screen, a system configuration diagram in which the selected plurality of supplier components are connected to each other, and generates a system configuration adjustment screen for the user to adjust at least one of a change in a pipe route, a change in a pipe length, and a change in a pipe disposition angle in the system configuration diagram.

6. The purchase assistance device according to Claim 5,
wherein the plurality of supplier components are selectable for each of the element components in the comparison selection screen, and
the system configuration generation unit generates, in a case where the plurality of supplier components are selected for each of the element components, the system configuration adjustment screen for each case where each of the supplier components is employed.

7. The purchase assistance device according to Claim 1,
wherein a configuration is made to enable the user to select a supplier from whom the user desires to receive a quotation sheet based on the order specification sheet.

8. The purchase assistance device according to Claim 1,
wherein the standard system configuration generation unit generates a standard system configuration diagram in which the plurality of standard components specified for each of the element components are connected to each other, generates a standard system configuration adjustment screen for causing the user to adjust a position and a disposition order of the standard components configuring the standard system configuration diagram and to perform at least one of addition of a pipe, a change in a transport path, and a change in a pipe length, and transmits the generated standard system configuration adjustment screen to a client terminal.

9. A purchase assistance device that assists in purchasing a fluid transport system including a plurality of plant components, the purchase assistance device comprising:
a condition input assistance unit that acquires, as selection conditions, a required function and a required specification related to a fluid transport system that a user desires to purchase;
a standard system configuration generation unit that specifies, from a standard component database in which information on a plurality of standard components related to the fluid transport system is stored, a plurality of standard components each corresponding to a plurality of element components configuring the fluid transport system based on the selection conditions;
a system component selection unit that selects, based on specifications of the plurality of standard components, one or a plurality of supplier components each corresponding to the element components from a supplier component database in which information on supplier components sold by a supplier is stored; and
a selection candidate generation unit that generates a plurality of system configuration candidates, which are combinations of supplier components configuring the fluid transport system, based on the selected plurality of supplier components, generates a comparison selection screen in which the plurality of system configuration candidates are shown in a comparable manner, and provides the generated comparison selection screen to a client terminal.

10. The purchase assistance device according to Claim 9, further comprising:
a system configuration generation unit that generates, in a case where one or the plurality of system configuration candidates are selected in the comparison selection screen, a system configuration diagram in which the plurality of supplier components configuring the system configuration candidate are connected to each other for each of the selected system configuration candidates, and generates a system configuration adjustment screen for the user to adjust at least one of a change in a pipe route, a change in a pipe length, and a change in a pipe disposition angle in the system configuration diagram.

11. The purchase assistance device according to Claim 9, further comprising:
an order placement assistance unit that makes a quotation request to a target supplier, based on one or the plurality of system configuration candidates selected from among the plurality of system configuration candidates, creates a quotation sheet in which information, a price, and a delivery date of a supplier component are shown for each of the system configuration candidates, based on a quotation sheet created by the target supplier, and provides the created quotation sheet to the client terminal.

12. The purchase assistance device according to Claim 9,
wherein the standard system configuration generation unit generates a standard system configuration diagram in which the plurality of standard components specified for each of the element components are connected to each other, generates a standard system configuration adjustment screen for causing the user to adjust a position and a disposition order of the standard components configuring the standard system configuration diagram and to perform at least one of addition of a pipe, a change in a transport path, and a change in a pipe length, and transmits the generated standard system configuration adjustment screen to the client terminal.

13. A purchase assistance method of assisting in purchasing a fluid transport system including a plurality of plant components, the purchase assistance method executed by a computer comprising:
a condition input assistance step of acquiring, as selection conditions, a required function and a required specification related to a fluid transport system that a user desires to purchase;
a standard system configuration generation step of specifying, from a standard component database in which information on a plurality of standard components related to the fluid transport system is stored, a plurality of standard components each corresponding to a plurality of element components configuring the fluid transport system based on the selection conditions; and
an order specification sheet creation step of creating an order specification sheet based on a standard fluid transport system configured of the specified plurality of standard components.

14. A purchase assistance method of assisting in purchasing a fluid transport system including a plurality of plant components, the purchase assistance method executed by a computer comprising:
a condition input assistance step of acquiring, as selection conditions, a required function and a required specification related to a fluid transport system that a user desires to purchase;
a standard system configuration generation step of specifying, from a standard component database in which information on a plurality of standard components related to the fluid transport system is stored, a plurality of standard components each corresponding to a plurality of element components configuring the fluid transport system based on the selection conditions;
a system component selection step of selecting, based on specifications of the plurality of standard components, one or a plurality of supplier components each corresponding to the element components from a supplier component database in which information on supplier components sold by a supplier is stored; and
a selection candidate generation step of generating a plurality of system configuration candidates, which are combinations of supplier components configuring the fluid transport system, based on the selected plurality of supplier components, generating a comparison selection screen in which the plurality of system configuration candidates are shown in a comparable manner, and providing the generated comparison selection screen to a client terminal.

15. A purchase assistance program for causing a computer to function as the purchase assistance device according to any one of Claims 1 to 12.
